# EUROPEAN PATENT APPLICATION

(11) **EP 1 652 867 A1**
(43) Date of publication of application: **03.05.2006**
(21) Application number: 05023676.9
(22) Date of filing: 28.10.2005
(51) Int. Cl.: C08F 297/04, C08F 8/04

(54) **Block copolymer, rubber composition containing the same and molded product**

(30) Priority: 29.10.2004 JP 2004316097
(71) Applicant: JSR Corporation, Tokyo 104-8410 (JP)
(72) Inventor: Tadaki, Toshihiro, Chuo-ku Tokyo 104-8410 (JP); Kobayashi, Naokazu, Chuo-ku Tokyo 104-8410 (JP); Hattori, Iwakazu, Chuo-ku Tokyo 104-8410 (JP)
(74) Representative: TBK-Patent

(57) **Abstract**

An objective of the present invention is to provide a block copolymer which is excellent in processability at the time of preparing a rubber composition and leads to a cross-linked rubber composition excellent in tensile property, wearing resistance, weatherability, ozone resistance and heat aging resistance when it is cross-linked, a rubber composition containing the block copolymer and a molded product. The block copolymer of the present invention comprises two polymer blocks each having an ethylenic unsaturated bond and other polymer block which is interposed between two polymer blocks, has a weight average molecular weight in the range from 5,000 to 100,000 and has a predetermined length. The weight average molecular weight of the polymer block having the ethylenic unsaturated bond is preferably in the range from 1,000 to 20,000.

## Description

### Technical Field

The present invention relates to a block copolymer, a rubber composition containing the block copolymer and a molded product. More particularly, it relates to a block copolymer which is excellent in processability at the time of preparing a rubber composition and leads to a cross-linked rubber composition excellent in tensile property, wearing resistance, weatherability, ozone resistance and heat aging resistance when it is cross-linked, a rubber composition containing the block copolymer and a molded product.

### Background Art

In order to allow durability of a rubber product such as a tire, a vibration-isolating rubber, a belt and a roller, improvements of tensile property and wearing resistance of a cross-linked rubber composition have been required.

It is generally effective to bring the molecular weight of a raw rubber to a higher level in order to improve tensile property and wearing resistance of the cross-linked rubber composition. However, if a raw rubber having unduly high molecular weight is used, processability in the step of kneading and the like is remarkably deteriorated and, as a result, dispessibility of a reinforcing agent and the like in the resultant rubber composition is deteriorated, to thereby sometimes cause a decrease of strength of the cross-linked rubber composition.

Then, a method for improving tensile property and wearing resistance of the cross-linked rubber composition without bringing the molecular weight of the raw rubber to an extremely high level has been tried. Namely, since various types of additives are ordinarily contained in a rubber product, a molecular design or the like for improving compatibility with carbon black, silica and the like has been performed for modifying a polymer component. For the purpose of preparing a rubber composition using carbon black as a reinforcing agent, for example, a styrene-butadiene (co)polymer in which an end of the polymer is modified or coupled by using a tin compound disclosed in JP-A S57-55912, and a styrene-butadiene (co)polymer in which an end of the polymer is modified by using an isocyanate compound disclosed in JP-A S61-141741 for and the like are known. In addition, for the purpose of preparing a rubber composition using silica as a reinforcing agent, a rubber composition comprising a polymer in which a functional group leading compatibility with silica is introduced, is proposed. A method for producing a polymer by subjecting silicon tetrahalide, trihalosilane or the like to reaction is disclosed in JP-B S49-36957. And a method for producing a polymer modified with a halogenated silane compound is disclosed in JP-A S48-54188. Further, a diene-based rubber in which an alkyl silyl group has been introduced and a diene-based rubber in which a halogenated silyl group have been introduced are disclosed in JP-A H1-188501 and JP-A H5-230286, respectively. And, JP-A H7-233217 discloses a diene-based rubber in which a tertiary amino group and an alkoxysilyl group are introduced.

When compositions comprising each polymer component are allowed to be vulcanized products, a certain extent of improvement in wearing resistance, tensile property and the like can be found but such improvement is not sufficient. Further, since the functional group leading compatibility with carbon black or silica is introduced in the polymer, there is a case processability at the time of preparing a rubber composition is deteriorated.

### Disclosure of the Invention

### Problems that the Invention is to Solve

An objective of the present invention is to provide a block copolymer which is excellent in processability at the time of preparing a rubber composition and leads to a cross-linked rubber composition excellent in tensile property, wearing resistance, weatherability, ozone resistance and heat aging resistance when it is cross-linked, a rubber composition containing the block copolymer and a molded product.

### Means for Solving the Problems

The present inventors have found that the problems above are solved by using a novel partially hydrogenated block copolymer in which polymer blocks each having a specified structure with a different degree of hydrogenation from one another are allowed to be aligned at a specified ratio in a specified sequence, without introducing a specified functional group.

The present invention is as follows.
1. A block copolymer, being characterized in comprising two polymer blocks each having an ethylenic unsaturated bond and other polymer block which is interposed between said two polymer blocks, has a uniform weight average molecular weight in the range from 5,000 to 100,000.
2. A block copolymer, being characterized in comprising two polymer blocks each having an ethylenic unsaturated bond and other polymer block which is interposed between the above two polymer blocks, has a weight average molecular weight in the range from 5,000 to 100,000 and has a predetermined length.
3. The block copolymer according to 1 or 2 above,
   wherein the weight average molecular weight of the above polymer block having an ethylenic unsaturated bond is in the range from 1,000 to 20,000.
4. The block copolymer according to any one of 1 to 3 above,
   wherein a sum of constitutional amount of the above polymer blocks each having an ethylenic unsaturated bond is in the range from 1 to 80% by mass based on the above block copolymer, and
   wherein a sum of constitutional amount of the above other polymer block is in the range from 99 to 20% by mass based on the above block copolymer.
5. The block copolymer according to any one of 1 to 3 above, The block copolymer according to any one of Claims 1 to 3.
   wherein structural formula of the above block copolymer is at least one type selected from the group consisting of A¹-B-A², A¹-B-A²-B-A¹, A¹-(B-A²)ₙ, A¹-(B-A²)ₙ-(B-A¹)ₘ, A¹-(B-A²)ₙ-(B-A¹)ₘ-(B-A²)ₘ, A¹-(B-A²-B-A¹)ₙ, (A¹-B)ₙX, (A¹-B-A²)ₛX, (A¹-B-A²-B-A¹)ₛX, (A¹-B-A¹-B-A²)ₛX and (A¹-B-A²-B-A²)ₛX,
   wherein A¹ and A² are the above polymer blocks each having an ethylenic unsaturated bond, and B is the above other polymer block, and
   wherein m represents an integer from 1 to 4; n represents an integer from 2 to 6; s represents an integer from 1 to 6; X represents a residue of a coupling agent; and when a plurality of Bs are disposed, these Bs may be same with or different from one another.
6. The block copolymer according to 5 above,
   wherein the above polymer block A¹ comprises mainly a monomer unit (a11) which is formed by a conjugated diene compound and is containing 1,4-bond, or the above monomer unit (a11) and a monomer unit (a12) which is formed by an aromatic vinyl compound, and
   wherein 80% or more of unsaturated bond originated from the above conjugated diene compound is contained as an ethylenic unsaturated bond in the above polymer block A¹.
7. The block copolymer according to 5 or 6 above,
   wherein the above polymer block B comprises mainly a monomer unit (b11) which is formed by a conjugated diene compound, or the above monomer unit (b11) and a monomer unit (b12) which is formed by an aromatic vinyl compound, and
   wherein 0 to 20% of unsaturated bond originated from the above conjugated diene compound is contained as an ethylenic unsaturated bond in the above polymer block B.
8. The block copolymer according to any one of 5 to 7 above,
   wherein the above polymer block A² comprises mainly a monomer unit (a21) which is formed by a conjugated diene compound and is containing 1,4-bond, or the above monomer unit (a21) and a monomer unit (a22) which is formed by an aromatic vinyl compound, and
   wherein 80% or more of unsaturated bond originated from the above conjugated diene compound is contained as an ethylenic unsaturated bond in the above polymer block A².
   It is noted the above phrase "comprises mainly" means that constitutional amount of the monomer unit is 80% or more by mass based on the sum of entire monomer units constituting each polymer block.
9. The block copolymer according to any one of 5 to 8 above,
   wherein the above polymer block A¹ is a polymer block containing from 80 to 100% by mass of a monomer unit which is formed by isoprene, or a polymer block containing from 80 to 100% by mass in total of a monomer unit which is formed by isoprene and a monomer unit which is formed by an aromatic vinyl compound, and
   wherein 80% or more of unsaturated bond originated from isoprene is contained as an ethylenic unsaturated bond in the above polymer block A¹.
10. The block copolymer according to any one of 5 to 9 above,
   wherein the above polymer block B is a polymer block containing from 80 to 100% by mass of a monomer unit which is formed by 1,3-butadiene, or a polymer block containing from 80 to 100% by mass in total of a monomer unit which is formed by 1,3-butadiene and a monomer unit which is formed by an aromatic vinyl compound, and
   wherein 0 to 20% of unsaturated bond originated from 1,3-butadiene is contained as an ethylenic unsaturated bond in the above polymer block B.
11. The block copolymer according to any one of 5 to 10 above,
   wherein the above polymer block A² is a polymer block containing from 80 to 100% by mass of a monomer unit which is formed by isoprene, or a polymer block containing from 80 to 100% by mass in total of a monomer unit which is formed by isoprene and a monomer unit which is formed by an aromatic vinyl compound, and
   wherein 80% or more of unsaturated bond originated from isoprene is contained as an ethylenic unsaturated bond in the above polymer block A².
12. The block copolymer according to any one of 1 to 11 above,
   which is produced by hydrogenating a polymer (P3) obtained by comprising step [1] for polymerizing a monomer (t1) containing a conjugated diene compound, step [II] for polymerizing a monomer (t2) containing a conjugated diene compound in the presence of the resultant polymer (P1) and step [III] for polymerizing a monomer (t3) containing a conjugated diene compound in the presence of the resultant polymer (P2),
   wherein a degree of hydrogenation in each of polymer blocks formed in the above steps [I] and [III] is less than 20%, and
   wherein a degree of hydrogenation in polymer block formed in the above step [II] is in the range from 80 to 100%.
13. The block copolymer according to any one of 1 to 11 above,
   which is produced by hydrogenating a polymer (P5) obtained by comprising step [1] for polymerizing a monomer (t1) containing a conjugated diene compound, step [II] for polymerizing a monomer (t2) containing a conjugated diene compound in the presence of the resultant polymer (P1) and step [IV] for coupling the resultant polymer (P4) by using a multifunctional coupling agent,
   wherein a degree of hydrogenation in polymer block formed in the above step [I] is less than 20%, and
   wherein a degree of hydrogenation in polymer block formed in the above step [II] is in the range from 80 to 100%.
14. The block copolymer according to any one of 1 to 11 above,
   which is produced by hydrogenating a polymer (P6) obtained by comprising step [1] for polymerizing a monomer (t1) containing a conjugated diene compound, step [II] for polymerizing a monomer (t2) containing a conjugated diene compound in the presence of the resultant polymer (P1), step [III] for polymerizing a monomer (t3) containing a conjugated diene compound in the presence of the resultant polymer (P2) and step [V] for coupling the resultant polymer (P3) by using a multifunctional coupling agent,
   wherein a degree of hydrogenation in each of polymer blocks formed in the above steps [I] and [III] is less than 20%, and
   wherein a degree of hydrogenation in polymer block formed in the above step [II] is in the range from 80 to 100%.
15. The block copolymer according to any one of 1 to 14 above,
   wherein weight average molecular weight of the above block copolymer is in the range from 7,000 to 1,000,000 and ratio of the above weight average molecular weight to number average molecular weight is in the range from 1 to 5.
16. A cross-linked polymer, in which the block copolymer according to 1 to 15 above is cross-linked by a cross-linking agent, being characterized in comprising a network structure.
17. A rubber composition, being characterized in comprising the block copolymer according to 1 to 15 above and filler composed of a material selected from the group consisting of carbon black and silica.
18. The rubber composition according to 17 above,
   wherein the above filler is carbon black, and
   wherein content of the above carbon black is from 20 to 120 parts by mass based on 100 parts by mass of the above block copolymer.
19. The rubber composition according to 17 above,
   wherein the above filler is silica, and
   wherein content of the above silica is from 20 to 140 parts by mass based on 100 parts by mass of the above block copolymer.
20. The rubber composition according to 17 above,
   wherein the above filler is carbon black and silica, and
   wherein a sum of contents of the above carbon black and the above silica is from 20 to 140 parts by mass based on 100 parts by mass of the above block copolymer.
21. A molded product, being characterized in comprising the rubber composition according to any one of 17 to 20 above.

### Advantage of the Invention

Since the block copolymer of the present invention comprises two polymer blocks each having an ethylenic unsaturated bond and other polymer block which is interposed between the above two polymer blocks, has a uniform weight average molecular weight in the range from 5,000 to 100,000, it is excellent in processability at the time of preparing a rubber composition. And when it is cross-linked, a cross-linked rubber composition excellent in tensile property, wearing resistance, weatherability, ozone resistance and heat aging resistance due to forming a regularly network structure in the cross-linked rubber composition is obtained.

Since the block copolymer of the present invention comprises two polymer blocks each having an ethylenic unsaturated bond and other polymer block which is interposed between the above two polymer blocks, has a weight average molecular weight in the range from 5,000 to 100,000 and, has a predetermined length, it is excellent in processability at the time of preparing a rubber composition. And when it is cross-linked, a cross-linked rubber composition excellent in tensile property, wearing resistance, weatherability, ozone resistance and heat aging resistance due to forming a regularly network structure in the cross-linked rubber composition is obtained.

In the case the structural formula of the present block copolymer is at least one type selected from the group consisting of A¹-B-A², A¹-B-A²-B-A¹, A¹-(B-A²)ₙ, A¹-(B-A²)ₙ-(B-A¹)ₘ, A¹-(B-A²)ₙ-(B-A¹)ₘ-(B-A²)ₘ, A¹-(B-A²⁻B-A¹)ₙ, (A¹-B)ₙX, (A¹-B-A²)ₛX, (A¹-B-A²-B-A¹)ₛX, (A¹-B-A¹-B-A²)ₛX and (A¹-B-A²-B-A²)ₛX (A¹ and A² are polymer blocks each having an ethylenic unsaturated bond mentioned above, and B is other polymer block mentioned above, m represents an integer from 1 to 4, n represents an integer from 2 to 6, s represents an integer from 1 to 6, X represents a residue of a coupling agent, and when a plurality of Bs are disposed, these Bs may be same with or different from one another), the network structure formed by cross-linking can be more regularly.

In addition, in the case the polymer blocks A¹, A² and B above are made of specified compounds, a more regularly cross-linked network can be formed, to thereby produce a cross-linked rubber composition further excellent in tensile property, wearing resistance, weatherability, ozone resistance and heat aging resistance.

Since the cross-linked polymer of the present invention is one where the present block copolymer is cross-linked by using a cross-linking agent and has a network structure, it has excellent strength.

Since the rubber composition of the present invention comprises the present block copolymer and filler composed of a material selected from the group consisting of carbon black and silica, when it is made to be a cross-linked rubber composition, it is excellent in tensile property, wearing resistance, weatherability, ozone resistance and heat aging resistance. In the case a rubber composition comprises the above filler in a specified amount based on 100 parts by mass of the present block copolymer, properties of the resultant cross-linked rubber composition comes to be particularly excellent.

### Best Mode for Carrying out the Invention

Hereinafter, the present invention will be described in detail.

### 1. Block copolymer

A block copolymer of the present invention is characterized in comprising two polymer blocks (hereinafter, referred to also as "polymer block A") each having an ethylenic unsaturated bond and other polymer block (hereinafter, referred to also as "polymer block B") which is interposed between the above two polymer blocks, has a uniform weight average molecular weight in the range from 5,000 to 100,000.

A block copolymer of the present invention is characterized in comprising two polymer blocks (hereinafter, referred to also as "polymer block A") each having an ethylenic unsaturated bond and other polymer block (hereinafter, referred to also as "polymer block B") which is interposed between the above two polymer blocks, has a weight average molecular weight in the range from 5,000 to 100,000 and has a predetermined length.

### 1-1. Polymer block A

This polymer block A is not particularly limited so long as it has at least one ethylenic unsaturated bond (carbon-carbon double bond). This ethylenic unsaturated bond may be contained in a main chain, a side chain or both chains in the polymer block A. In addition, this ethylenic unsaturated bond may be at the end of the present block copolymer when the bond is contained in the main chain.

The ethylenic unsaturated bond mentioned above may be derived from any compound, is not limited to any specific type thereof and is preferably derived from a conjugated diene compound. In the case the ethylenic unsaturated bond is formed by the conjugated diene compound or the like, the ethylenic unsaturated bond may be 1,4-bond, 1,2-bond, 3,4- bond (vinyl bond) and the like.

The polymer block A mentioned above may have 1,4-bond, 1,2-bond and 3,4-bond either each individually or in combination of two types or more. In the present invention, it is preferable that the polymer block A comprises 1,4-bond therein.

Therefore, the polymer block A mentioned above preferably comprises a monomer unit formed by a conjugated diene compound and can be in any of the following embodiments:
(1-1) a polymer block comprising mainly a monomer unit formed by a conjugated diene compound;
(1-2) a polymer block comprising mainly a monomer unit formed by a conjugated diene compound and a monomer unit formed by an aromatic vinyl compound;
(1-3) a polymer block comprising mainly a monomer unit formed by a conjugated diene compound, a monomer unit formed by an aromatic vinyl compound and a monomer unit formed by a monomer compound which is copolymerizable with both of the conjugated diene compound and the aromatic vinyl compound; and
(1-4) a polymer block comprising mainly a monomer unit formed by a conjugated diene compound and a monomer unit formed by a monomer compound which is except for an aromatic vinyl compound and is copolymerizable with the conjugated diene compound.

As for the conjugated diene compound mentioned above, 1,3-butadiene, isoprene, 2,3-dimethyl-1,3-butadiene, 2-chloro-1,3-butadiene, 1,3-pentadiene and the like may be used. These compounds may be used alone or in combination of two types or more. Among these, 1,3-butadiene and isoprene are preferred.

As for the aromatic vinyl compound mentioned above, styrene, 2-methylstyrene, 3-methylstyrene, 4-methylstyrene, α-methylstyrene, 2,4-dimethylstyrene, 2,4-diisopropylstyrene, 4-tert-butylstyrene, divinylbenzene, vinylbenzyl dimethyl amine, vinylbenzyl dimethyl aminoethanol amine, N,N-dimethylamino ethylstyrene, 4-tert-butoxystyrene, vinyl pyridine and the like may be used. These compounds may be used alone or in combination of two types or more. Among these, styrene is preferred.

Additionally, as for the above-mentioned monomer compound which is copolymerizable with both of the conjugated diene compound and the aromatic vinyl compound, an unsaturated carboxylic acid; an ester thereof such as alkyl ester, alkoxy ester, ester comprising hydroxyl group, ester comprising amino group and ester comprising amide group; a vinyl cyanide compound and the like may be used. These compounds may be used alone or in combination of two types or more.

As for the unsaturated carboxylic acid mentioned above, acrylic acid, methacrylic acid, crotonic acid, maleic acid, fumaric acid, itaconic acid and the like may be used.

As for the vinyl cyanide compound mentioned above, acrylonitrile, methacrylonitrile and the like may be used.

In the embodiment (1-1), a total amount of a monomer unit formed by the conjugated diene compound mentioned above is preferably 80% by mass or more, more preferably from 90 to 100% by mass and still more preferably from 95 to 100% by mass based on the sum of entire monomer units constituting the polymer block A.

In the embodiment (1-2), a total amount of a monomer unit formed by the conjugated diene compound mentioned above and a monomer unit formed by the aromatic vinyl compound mentioned above is preferably 80% by mass or more, more preferably from 90 to 100% by mass and still more preferably from 95 to 100% by mass based on the sum of entire monomer units constituting the polymer block A. Further, each of alignment sequence of the monomer unit formed by the conjugated diene compound mentioned above and the monomer unit formed by the aromatic vinyl compound mentioned above is not particularly limited.

In the embodiment (1-3), a total amount of a monomer unit formed by the conjugated diene compound mentioned above and a monomer unit formed by the aromatic vinyl compound mentioned above is preferably from 80 to 99% by mass, more preferably from 90 to 99% by mass and still more preferably from 95 to 98% by mass based on the sum of entire monomer units constituting the polymer block A. Further, each of alignment sequence of the monomer unit formed by the conjugated diene compound mentioned above, the monomer unit formed by the aromatic vinyl compound mentioned above and the monomer unit formed by the monomer compound which is copolymerizable with both of the conjugated diene compound and the aromatic vinyl compound is not particularly limited.

In the embodiment (1-4), a total amount of a monomer unit formed by the conjugated diene compound mentioned above is preferably from 80 to 99% by mass, more preferably from 90 to 99% by mass and still more preferably from 95 to 98% by mass based on the sum of entire monomer units constituting the polymer block A. Further, each of alignment sequence of the monomer unit formed by the conjugated diene compound mentioned above and the monomer unit formed by the monomer compound which is copolymerizable with the conjugated diene compound mentioned above is not particularly limited.

Furthermore, in the embodiments (1-2) and (1-3), respective constitutional amounts of the monomer unit formed by the conjugated diene compound and the monomer unit formed by the aromatic vinyl compound are preferably 50% by mass or more and 50% by mass or less, more preferably from 52 to 97% by mass and from 48 to 3% by mass and still more preferably from 57 to 92% by mass and from 43 to 8% by mass, based on 100% by mass of the sum of these amounts. If the constitutional amount of the monomer unit formed by the aromatic vinyl compound is too large, hardness of the cross-linked polymer may become high and processability at the time of preparing a rubber composition or a molded product may be deteriorated.

Still further, it is preferable that 80% or more of the unsaturated bond originated from the conjugated diene compound in the polymer block A according to the present invention is contained as the ethylenic unsaturated bond. The content is more preferably from 85 to 100%, still more preferably from 90 to 100% and particularly preferably from 95 to 100%. The ethylenic unsaturated bond can be measured by IR, NMR or the like. Same is true with cases described below.

A preferable example of the embodiment (1-1) includes a polymer block where a monomer unit (a11) which is formed by the conjugated diene compound and is containing 1,4-bond, is mainly comprised, and 80% or more of unsaturated bond originated from the conjugated diene compound is contained as an ethylenic unsaturated bond in this polymer block, and the like. More specifically, the preferred is a polymer block in which the conjugated diene compound is isoprene, an amount of the monomer unit formed by this isoprene is from 80 to 100% by mass, and 80% or more of the unsaturated bond originated from isoprene is contained as the ethylenic unsaturated bond therein. Further, a more preferable constitutional amount of the monomer unit (a11) and a more preferable content of the ethylenic unsaturated bond are same as those described above.

In addition, a preferable example of the embodiment (1-2) includes a polymer block where a monomer unit (a11) which is formed by the conjugated diene compound and is containing 1,4-bond, and a monomer unit (a12) which is formed by the aromatic vinyl compound are mainly comprised, and 80% or more of the unsaturated bond originated from the conjugated diene compound is contained as an ethylenic unsaturated bond in this polymer block, and the like. More specifically, the preferred is a polymer block in which the conjugated diene compound is isoprene, a sum of the monomer unit formed by this isoprene and the monomer unit formed by the aromatic vinyl compound such as styrene is from 80 to 100% by mass, and 80% or more of the unsaturated bond originated from isoprene is contained as the ethylenic unsaturated bond therein. Further, a preferable sum of the monomer unit (a11) formed by the conjugated diene compound (isoprene) and the monomer unit (a12) formed by the aromatic vinyl compound, a more preferable constitutional amount of each monomer unit and a more preferable content of the ethylenic unsaturated bond are same as those described above.

The weight average molecular weight of the polymer block A mentioned above is not particularly limited and is preferably in the range from 1,000 to 20,000, more preferably in the range from 3,000 to 18,000 and still more preferably in the range from 5,000 to 15,000. If the weight average molecular weight is too low, it is hard to obtain a cross-linked polymer having sufficient cross-linked network due to unduly short chain length of the polymer block A, and tensile strength, breaking strength and wearing resistance may markedly be deteriorated. On the other hand, if the weight average molecular weight is too high, tensile strength, breaking strength and wearing resistance of the resultant cross-linked polymer come to be similar to those in a case in which an ordinary diene-based polymer is used and, accordingly, there is a case in which an improvement effect can not be exhibited. Further, the weight average molecular weight mentioned above is determined by using a gel permeation chromatography (GPC) in terms of polystyrene. Same is true with cases described below.

A total of the constitutional amount of the polymer block A is preferably from 1 to 80% by mass, more preferably from 3 to 60% by mass and still more preferably from 5 to 40% by mass, based on the block copolymer of the present invention. In the case in which the constitutional amount of the polymer block A is unduly large, tensile strength, breaking strength and wearing resistance of the cross-linked polymer thereof come to be similar to those in a case in which an ordinary diene-based polymer is used and, accordingly, there is a case in which an improvement effect can not be exhibited.

The block copolymer of the present invention comprises two polymer block A's and polymer block B which is interposed between these polymer block to be described below, and a plurality of the polymer block A's may be same constitution with or different from others.

### 1-2. Polymer block B

This polymer block B is not particularly limited so long as it has a weight average molecular weight in the range from 5,000 to 100,000 and has a predetermined length or it has a uniform weight average molecular weight in the range from 5,000 to 100,000.

The polymer block B may be formed from any compound, however, it is preferable that the polymer block B mainly comprises a methylene group (-CH₂-). The methylene group may be a modified group in which a part or all of hydrogen atoms are substituted by any one of halogen atom; hydroxyl group; amino group; organic group including hydrocarbon group such as alkyl group, cycloalkyl group and phenyl group, hydrocarbon group substituted with halogen atom, hydroxyl group, amino group, amide group or the like, pyridyl group and the like; and the like. Therefore, the polymer block B mentioned above comprises a main chain where the methylene group or the like are aligned with each other.

The polymer block B mentioned above may have an ethylenic unsaturated bond, but it is preferably that it does not have the bond. In the case the polymer block B has an ethylenic unsaturated bond, the bond may be contained in a main chain or in a side chain.

The polymer block B mentioned above is preferably one formed from a compound containing a conjugated diene compound and can be in any of the following embodiments:
(2-1) a polymer block comprising mainly a monomer unit formed by a conjugated diene compound;
(2-2) a polymer block comprising mainly a monomer unit formed by a conjugated diene compound and a monomer unit formed by an aromatic vinyl compound;
(2-3) a polymer block comprising mainly a monomer unit formed by a conjugated diene compound, a monomer unit formed by an aromatic vinyl
compound and a monomer unit formed by a monomer compound which is copolymerizable with both of the conjugated diene compound and the
aromatic vinyl compound; and
(2-4) a polymer block comprising mainly a monomer unit formed by a conjugated diene compound and a monomer unit formed by a monomer compound which is except for an aromatic vinyl compound and is copolymerizable with the conjugated diene compound.

Such monomer compounds can favorably use those illustrated in the description of the polymer block A mentioned above and may be used alone or in combination of two types or more.

In the embodiment (2-1), a total amount of a monomer unit formed by the conjugated diene compound mentioned above is preferably 80% by mass or more, more preferably from 90 to 100% by mass and still more preferably from 95 to 100% by mass based on the sum of entire monomer units constituting the polymer block B.

In the embodiment (2-2), a total amount of a monomer unit formed by the conjugated diene compound mentioned above and a monomer unit formed by the aromatic vinyl compound mentioned above is preferably 80% by mass or more, more preferably from 90 to 100% by mass and still more preferably from 95 to 100% by mass based on the sum of entire monomer units constituting the polymer block B. Further, each of alignment sequence of the monomer unit formed by the conjugated diene compound mentioned above and the monomer unit formed by the aromatic vinyl compound mentioned above is not particularly limited, however, for example, one where the monomer unit formed from the aromatic vinyl compound is arranged at random therein, or one where a simple chain based on the monomer unit formed by the aromatic vinyl compound can be used as the polymer block B.

In the embodiment (2-3), a total amount of a monomer unit formed by the conjugated diene compound mentioned above and a monomer unit formed by the aromatic vinyl compound mentioned above is preferably from 80 to 99% by mass, more preferably from 90 to 99% by mass and still more preferably from 95 to 98% by mass based on the sum of entire monomer units constituting the polymer block B. Further, each of alignment sequence of the monomer unit formed by the conjugated diene compound mentioned above, the monomer unit formed by the aromatic vinyl compound mentioned above and the monomer unit formed by the monomer compound which is copolymerizable with both of the conjugated diene compound and the aromatic vinyl compound is not particularly limited.

In the embodiment (2-4), a total amount of a monomer unit formed by the conjugated diene compound mentioned above is preferably from 80 to 99% by mass, more preferably from 90 to 99% by mass and still more preferably from 95 to 98% by mass based on the sum of entire monomer units constituting the polymer block B.

Furthermore, in the embodiments (2-2) and (2-3), respective constitutional amounts of the monomer unit formed by the conjugated diene compound and the monomer unit formed by the aromatic vinyl compound are preferably from 40 to 98% by mass and from 60 to 2% by mass, more preferably from 50 to 95% by mass and from 50 to 5% by mass and still more preferably from 55 to 92% by mass and from 45 to 8% by mass, based on 100% by mass of the sum of these amounts. If the constitutional amount of the monomer unit formed by the aromatic vinyl compound is too large, hardness of the cross-linked polymer may become high and processability at the time of preparing a rubber composition or a molded product may be deteriorated.

Still further, the polymer block B according to the present invention may comprise an ethylenic unsaturated bond as described above, however, it is preferable that from 0 to 20% of the unsaturated bond originated from the conjugated diene compound is contained as the ethylenic unsaturated bond. The content is more preferably from 0 to 15%, still more preferably from 0 to 12% and particularly preferably from 1 to 10%.

A preferable example of the embodiment (2-1) includes a polymer block where a monomer unit (b11) which is formed by the conjugated diene compound and is containing 1,2-bond in an amount from 0 to 20%, is mainly comprised, and 0 to 20% of unsaturated bond originated from the conjugated diene compound is contained as an ethylenic unsaturated bond in this polymer block, and the like. More specifically, the preferred is a polymer block in which the conjugated diene compound is 1,3-butadiene, an amount of the monomer unit formed by this 1,3-butadiene is from 80 to 100% by mass, and 0 to 20% of the unsaturated bond originated from 1,3-butadiene is contained as the ethylenic unsaturated bond therein. Further, a more preferable constitutional amount of the monomer unit (b11) and a more preferable content of the ethylenic unsaturated bond are same as those described above.

In addition, a preferable example of the embodiment (2-2) includes a polymer block where a monomer unit (b11) which is formed by the conjugated diene compound and is containing 1,2-bond, and a monomer unit (b12) which is formed by the aromatic vinyl compound are mainly comprised, and 0 to 20% of unsaturated bond originated from the conjugated diene compound is contained as an ethylenic unsaturated bond in this polymer block, and the like. More specifically, the preferred is a polymer block in which the conjugated diene compound is 1,3-butadiene, a sum of the monomer unit formed by this 1,3-butadiene and the monomer unit formed by the aromatic vinyl compound such as styrene is from 80 to 100% by mass, and 0 to 20% or more of the unsaturated bond originated from 1,3-butadiene is contained as the ethylenic unsaturated bond therein. Further, a preferable sum of the monomer unit (b11) formed by the conjugated diene compound (1,3-butadiene) and the monomer unit (b12) formed by the aromatic vinyl compound, a more preferable constitutional amount of each monomer unit and a more preferable content of the ethylenic unsaturated bond are same as those described above.

A weight average molecular weight of the polymer block B mentioned above is in the range from 5,000 to 100,000, preferably in the range from 20,000 to 95,000 and more preferably in the range from 35,000 to 85,000. If the weight average molecular weight is too low, tensile strength, breaking strength and wearing resistance of the cross-linked polymer thereof come to be similar to those in a case in which an ordinary diene-based polymer is used and, accordingly, there is a case in which an improvement effect can not be exhibited. On the other hand, when the weight average molecular weight is too high, tensile strength, breaking strength and wearing resistance of the cross-linked polymer thereof may be deteriorated.

A total of the constitutional amount of the polymer block B is preferably from 99 to 20% by mass, more preferably from 97 to 40% by mass and still more preferably from 95 to 60% by mass, based on the block copolymer of the present invention. In the case in which the constitutional amount of the polymer block B is unduly small, only a cross-linked polymer which is hard to control a distance between cross-linking points may be formed due to unduly short chain length of the polymer block B, and tensile strength, breaking strength and wearing resistance of the cross-linked polymer thereof come to be similar to those in a case where an ordinary diene-based polymer is used and, accordingly, there is a case in which an improvement effect can not be exhibited.

The block copolymer of the present invention comprises two polymer block A's and polymer block B which is interposed between these polymer block to be described below, however, in the case a plurality of the polymer block Bs may be same constitution with or different from others.

When these polymer block Bs are different from one another, for example, the structures or weight average molecular weights of these polymer block Bs are different from one another, they can have a predetermined length by allowing weight average molecular weights of respective polymer blocks to be same to one another, or almost same to one another, or allowing an error range to be established by a comparison of weight average molecular weights of adjacent polymer blocks to be preferably within ±25%. The error range is more preferably within ±15% and still more preferably within ±10%. In other words, in the case a polymer chain has plural polymer block B, these polymer Bs are same or different constitution one another. When these polymer blocks Bs are same constitution or when these polymer blocks Bs are different from one another, they can have a predetermined length by allowing weight average molecular weights of respective polymer blocks to be same to one another, or almost same to one another, or allowing an error range to be established by a comparison of weight average molecular weights of adjacent polymer blocks to be preferably within ±25%. The error range is more preferably within ±15% and still more preferably within ±10%.

### 1-3. Structure of block copolymer

Structure of the block copolymer of the present invention is not particularly limited. When the polymer blocks each having ethylenic unsaturated bond is defined as "A¹" and "A²" (however, A¹ and A² may be same with or different from each other) and another polymer block is defined as "B", following structures are mentioned:
(1) A¹-B-A²
(2) A¹-B-A²-B-A¹
(3) A¹-(B-A²)ₙ
(4) A¹-(B-A²)ₙ-(B-A¹)ₘ
(5) A¹-(B-A²)ₙ-(B-A¹)ₘ-(B-A²)ₘ
(6) A¹-(B-A²-B-A¹)ₙ
(7) (A¹-B)ₙX
(8) (A¹-B-A²)ₛX
(9) (A¹-B-A²-B-A¹)ₛX
(10) (A¹-B-A¹-B-A²)ₛX
(11) (A¹-B-A²-B-A²)ₛX and the like.

In the above, m represents an integer selected from 1 to 4; n represents an integer selected from 2 to 6; s represents an integer selected from 1 to 6; X represents a residue of a coupling agent. In addition, in the aspects (2) and (11) mentioned above, when a plurality of Bs is disposed, these Bs may be same with or different from one another.

The block copolymers represented by structural formulae in the aspects (7) to (11) mentioned above are copolymers where the polymer block A¹ and the like are alternately bonded with the other polymer block B via a residue X of the coupling agent to have a polymeric molecular chain which is extended or branched.

It is noted that the block copolymer represented by the structural formula in the aspect (8) is described by (A¹-B-A²)ₛX for convenience' sake, but A¹, A² and A³ are polymer blocks which are different from one another. And when s represents 2, (A¹-B-A²)-X-(A¹-B-A²). (A¹-B-A²)-X-(A²-B-A³), (A¹-B-A²)-X-(A¹-B-A³), (A¹-B-A²)-X-(A³-B-A²) and the like are mentioned. In this way, structural formulae of other aspects can also be are allowed to have many embodiments.

In the case the present block copolymer comprises a plurality of the polymer block Bs, these polymer blocks may be same with or different from one another. Specific examples having four polymer block Bs in the block copolymer represented by the structural formula in the aspect (3), are as follows:
A-B¹-A-B¹-A-B¹-A-B¹-A
A-B¹-A-B¹-A-B²-A-B²-A
A-B¹-A-B²-A-B¹-A-B²-A
A-B¹-A-B²-A-B²-A-B¹-A and the like.

Preferable combinations of the polymer blocks A and B constituting the block copolymer of the present invention are as follows:
[i] an aspect in which the polymer block A is formed by using isoprene as a conjugated diene compound in an amount of 80% by mass or more and the polymer block B is formed by using 1,3-butadiene as the conjugated diene compound (or, in the case isoprene and 1,3-butadiene are used in combination, 1,3-butadiene is used in an amount of 80% by mass or more);
[ii] an aspect in which, when 1,3-butadiene is used for polymer blocks A and B, the polymer block A' to be constituted a pre-hydrogenation polymer (polymer comprising polymer blocks to be formed respective polymer blocks) is allowed to be a block mainly containing 1,4-bond and the polymer block B' to be constituted a pre-hydrogenation polymer is allowed to be a block mainly containing 1,2-bond, and then, these pre-hydrogenation polymer is hydrogenated to the block copolymer;
[iii] an aspect in which, when isoprene is used for the polymer blocks A and B, the polymer block A' to be constituted a pre-hydrogenation polymer is allowed to be a block mainly containing 1,4-bond and the polymer block B' to be constituted a pre-hydrogenation polymer is allowed to be a block mainly containing 3,4-bond, and then, these pre-hydrogenation polymer is hydrogenated to the block copolymer; and the like.

Now, the aspects above are described more specifically.

As for [i], a block copolymer comprising the polymer block A where only isoprene is used and the polymer block B where only 1,3-butadiene is used, and the like can be used.

As for [ii], a block copolymer comprising the polymer block A where 1,3-butadiene is used and comprises a block obtained by hydrogenating a block having a monomer unit mainly containing 1,4-bond and the polymer block B where 1,3-butadiene is used and comprises a block obtained by hydrogenating a block having a monomer unit mainly containing 1,2-bond, and the like can be used.

As for [iii], a block copolymer comprising the polymer block A where isoprene is used and comprises a block obtained by hydrogenating a block having a monomer unit mainly containing 1,4-bond and the polymer block B where isoprene is used and comprises a block obtained by hydrogenating a block having a monomer unit mainly containing 3,4-bond, and the like can be used.

Constitutional ratios for respective total amounts of polymer blocks A and B which constitute the block copolymer of the present invention are preferably from 1 to 80% by mass and from 99 to 20% by mass, more preferably from 3 to 60% by mass and from 97 to 40% by mass and still more preferably from 5 to 60% by mass and from 95 to 40% by mass, based on 100% by mass of sum of these amounts.

A weight average molecular weight of the block copolymer of the present invention is preferably in the range from 7,000 to 1,000,000, preferably from 25,000 to 900,000 and more preferably from 50,000 to 800,000. If this weight average molecular weight is too low, there is a case in which tensile strength, breaking strength and wearing resistance of a cross-linked polymer thereof may be deteriorated. On the other hand, if the weight average molecular weight is too high, processability is deteriorated and, as a result, there is a case in which tensile strength, breaking strength and wearing resistance may be deteriorated.

Further, a ratio (Mw/Mn) of the weight average molecular weight to the number average molecular weight is preferably in the range from 1 to 5, preferably from 1 to 3 and more preferably from 1.1 to 2.5. If this ratio is unduly large, since both a low molecular weight component and a high molecular weight component are increased, there is a case in which tensile strength, breaking strength and wearing resistance of the cross-linked polymer thereof may be deteriorated.

The preferable block copolymer of the present invention is a polymer by hydrogenating a polymer comprising polymer blocks to be formed the respective polymer block mentioned above (hereinafter, referred to also as "pre-hydrogenation polymer"). In addition, it is preferable that the block copolymer of the present invention is obtained under consideration of an easiness of hydrogenation to each polymer block which constitutes the pre-hydrogenation polymer, namely, a difference of the hydrogenation rate.

Therefore, the polymer block A is a polymer block obtained by making a hydrogenation reaction hard to proceed with a method where the hydrogenation rate against the polymer block A' that is constituting the pre-hydrogenation polymer and is to be formed the polymer block A makes extremely smaller or by suppressing the hydrogenation. That is, the polymer block A is preferably one where 80% or more of the unsaturated bond derived from the conjugated diene compound contained in the polymer block A' remains unhydrogenated as the ethylenic unsaturated bond; more preferably 85% or more thereof, still more preferably 90% or more thereof, and particularly preferably 95% or more thereof remains unhydrogenated.

In addition, the polymer block B is a polymer block obtained by performing a hydrogenation reaction with a method where the hydrogenation rate against the polymer block B' that is constituting the pre-hydrogenation polymer and is to be formed the polymer block B makes extremely larger. That is, the polymer block B is preferably one where 80% or more of the unsaturated bond derived from the conjugated diene compound contained in the polymer block B' is hydrogenated; more preferably 85% or more thereof, still more preferably from 88 to 99% thereof, and particularly preferably from 90 to 98% thereof is hydrogenated.

### 1-4. Production method for block copolymer

The present block copolymer can be a polymer which is produced by hydrogenating a polymer (P3) obtained by comprising step [1] for polymerizing a monomer (t1) containing a conjugated diene compound, step [II] for polymerizing a monomer (t2) containing a conjugated diene compound in the presence of the resultant polymer (P1) and step [III] for polymerizing a monomer (t3) containing a conjugated diene compound in the presence of the resultant polymer (P2), and has a degree of hydrogenation in each of polymer blocks formed in the steps [I] and [III] is less than 20%, and has a degree of hydrogenation in polymer block formed in the step [II] is in the range from 80 to 100%. However, when each of these three steps is performed one time, a prehydrogenation polymer having A^{1'}-B-A^{2'} structure for producing the block copolymer having structure according to the aspect (1) as described in the article 1-3 above, namely, A¹-B-A² structure is obtained. For producing other block copolymers having structures according to aspects (2) to (6) and the like as described in the article 1-3 above, polymerizations corresponding to steps [II] and [III] may be performed.

In the step [I], the monomer (t1) containing a conjugated diene compound is polymerized. This conjugated diene compound can optionally be used in combination of an aromatic vinyl compound and the like. This step [I] is performed for the polymer block A, and examples and amounts of these compounds to be used are same as those as described in the article 1-1 above. In addition, it is preferable that the polymerization in the step [I] is performed by an anionic polymerization while using an organolithium compound as a polymerization initiator.

As for the organolithium compound mentioned above, a hydrocarbon compound of metallic lithium, a complex of metallic lithium and polar compound, and the like may be used. As for the hydrocarbon compound of metallic lithium mentioned above, ethyl lithium, n-propyl lithium, 1-propyl lithium, n-butyl lithium, sec-butyl lithium, tert-butyl lithium, n-hexyl lithium, n-octyl lithium, n-decyl lithium, phenyl lithium, 2-butyl phenyl lithium, 2-naphthyl lithium, cyclohexyl lithium, 4-cyclopentyl lithium and the like may be used. These compounds can be used either alone or in combination of two types or more.

The organolithium compound mentioned above can simultaneously be used with a phenoxide comprising an alkaline earth metal such as barium nonyl phenoxide; an organoaluminum compound such as a trialkyl aluminum; an alkaline metal salt of a dialkylaminoethanol; an alkaline metal salt of a monoalkylene glycol and the like.

As for a solvent to be used in polymerization, hydrocarbon such as aliphatic hydrocarbon, aromatic hydrocarbon and alicyclic hydrocarbon is generally used. As for the aliphatic hydrocarbon, n-pentane, 1-pentane, n-hexane, n-heptane, n-octane and the like may be used. As for the aromatic hydrocarbon, benzene, xylene, ethyl benzene and the like may be used. As for the alicyclic hydrocarbon, methylcyclopentane, cyclohexane and the like may be used. These compounds may be used either alone or in combination of two types or more.

The polymerization in the step [I] is performed by means of either a batch polymerization method or a continuous polymerization method, at a temperature in the range of from 0°C to 120°C ordinarily. And it may be performed either at a constant temperature or while raising the temperature. In addition, a polymerization period of time is ordinarily in the range from 5 minutes to 12 hours.

The polymer (P1) is obtained according to the step [I]. The polymer (P1) corresponds to the polymer block A¹' (prior to hydrogenation) for obtaining a pre-hydrogenation polymer having A¹'-B'-A²' structure.

A weight average molecular weight of the polymer (P1) according to the step [I] is preferably in the range from 1,000 to 20,000, more preferably in the range from 3,000 to 18,000 and still more preferably in the range from 5,000 to 15,000.

In the step [II], the monomer (t2) containing a conjugated diene compound is polymerized in the presence of the polymer (P1). This conjugated diene compound can optionally be used in combination of an aromatic vinyl compound and the like. This step [II] is performed for the polymer block B, and examples and amounts of these compounds to be used are same as those as described in the article 1-2 above. In addition, it is preferable that the polymerization in the step [II] is performed under the same condition as that in the step [I]. The step [II] maybe performed by adding the monomer (t2) and the like to the polymerization system in the step [I] mentioned above.

The polymerization in the step [II] is performed by means of either a batch polymerization method or a continuous polymerization method, at a temperature in the range of from 0°C to 120°C ordinarily. And it may be performed either at a constant temperature or while raising the temperature. In addition, a polymerization period of time is ordinarily in the range from 5 minutes to 12 hours.

The polymer (P2) is obtained according to the step [II]. The polymer (P2) comprises a portion corresponding to the polymer block B' (prior to hydrogenation) for obtaining a pre-hydrogenation polymer having A¹'-B'-A²' structure.

A weight average molecular weight of the polymer block B according to the step [II] is preferably in the range from 5,000 to 10,000, more preferably in the range from 20,000 to 95,000 and still more preferably in the range from 35,000 to 85,000.

In the step [III], the monomer (t3) containing a conjugated diene compound is polymerized in the presence of the polymer (P2). This conjugated diene compound can optionally be used in combination of an aromatic vinyl compound and the like. This step [III] is performed for the polymer block B, and examples and amounts of these compounds to be used are same as those as described in the article 1-1 above. In addition, it is preferable that the polymerization in the step [III] is performed under the same condition as that in the step [I] or [II]. The step [III] may be performed by adding the monomer (t3) and the like to the polymerization system in the step [II] mentioned above.

The polymerization in the step [III] is performed by means of either a batch polymerization method or a continuous polymerization method, at a temperature in the range of from 0°C to 120°C ordinarily. And it may be performed either at a constant temperature or while raising the temperature. In addition, a polymerization period of time is ordinarily in the range from 5 minutes to 12 hours.

The polymer (P3) is obtained according to the step [III]. The polymer (P3) comprises a portion corresponding to the polymer block A^{2'} (prior to hydrogenation) for obtaining a pre-hydrogenation polymer having A¹'-B'-A²' structure.

A weight average molecular weight of the polymer block A^{2'} according to the step [III] is preferably in the range from 1,000 to 20,000, more preferably in the range from 3,000 to 18,000 and still more preferably in the range from 5,000 to 15,000.

In the steps [I], [II] and [III], when a monomer unit formed by an aromatic vinyl compound is random-arranged in a polymer block using a conjugated diene compound and an aromatic vinyl compound in combination, or when a single chain comprising this monomer unit is formed, polymerization can be performed by adding an ether compound, a tertiary amine compound, a potassium compound and the like. Additionally, when compounds to be described below are used, it is possible to control a microstructure (vinyl bond content) in a polymerized portion by the conjugated diene compound.

As for the ether compound mentioned above, tetrahydrofuran, α-methoxytetrahydrofuran, dimethoxybenzenem, dimethoxyethane, diethyl ether, di-n-butyl ether, ethylene glycol diethyl ether, ethylene glycol dibutyl ether, diethylene glycol dimethyl ether, diethylene glycol dibutyl ether, bistetrahydrofuryl propane and the like can be used. These compounds may be used alone or in combination of two types or more.

As for the tertiary amine compound mentioned above, triethylamine, pyridine N,N,N',N'-tetramethylethylene diamine, 1,2-dipiperidinoethane, N-methylmorpholine and the like may be used. These compounds may be used alone or in combination of two types or more.

As for the potassium compound mentioned above, a potassium alkoxide, potassium phenoxide, potassium benzyloxide, a potassium salt of a fatty acid, a potassium salt of an aromatic carboxylic acid, a potassium salt of an organic sulfonic acid, a potassium salt of an organic phosphorous acid and the like may be used. These compounds may be used alone or in combination of two types or more.

As for the potassium alkoxide mentioned above, one represented by the general formula: RCH₂OK (R representing hydrogen atom or hydrocarbon group having from 1 to 10 carbon atoms) such as potassium isopropoxide, potassium-tert-butoxide, potassium-tert-amyloxide, potassium-n-heptoxide and the like may be used.

As for the potassium salt of a fatty acid mentioned above, potassium salts of 2-ethylhexoic acid, isovaleric acid, capric acid, lauric acid, palmitic acid, stearic acid, oleic acid, linolenic acid or the like may be used.

As for the potassium salt of an aromatic carboxylic acid mentioned above, potassium salts of benzoic acid, phthalic acid or the like may be used.

As for the potassium salt of an organosulfonic acid mentioned above, potassium salts of dodecyl benzene sulfonic acid, tetradecyl benzene sulfonic acid, hexadecyl benzene sulfonic acid, octadecyl benzene sulfonic acid or the like may be used.

As for the potassium salt of an organophosphorous acid mentioned above, potassium salts of phosphorous acid diethyl, phosphorous acid diisopropyl, phosphorous acid dibutyl, phosphorous acid dilauryl, phosphorous acid diphenyl or the like may be used.

An amount of the potassium salt to be used is preferably from 0.005 to 0.5 mol on the basis of 1 gram atomic equivalent of an organolithium compound to be used for being a lithium-based multifunctional polymerization initiator. When the amount thereof is less than 0.005 mol, there is a case in which an addition effect (improvement of reactivity by lithium-based multifunctional polymerization initiator, randomization of aromatic vinyl compound or single chain provision) may not be sufficiently exhibited. On the other hand, when the amount thereof is more than 0.5 mol, there is a case in which polymerization activity is deteriorated to greatly reduce productivity and, also, modification efficiency at the time of performing a reaction which modifies a polymer terminal by using a functional group is deteriorated.

A method for using any one of the potassium compound mentioned above is not particularly limited and it is preferable to use it simultaneously with a polymerization initiator.

Further, a functional group such as -OH group, -COOH group, -NR₂ group, -NHR group, -NCO group, -CSSH group and -Si(OR)ₙ group (in which R represents an alkyl group having from 1 to 20 carbon atoms or an aryl group having from 6 to 20 carbon atoms; and n represents an integer of from 1 to 3) can be introduced to an active terminal of the polymer obtained in each of the steps [I] to [III] by using a compound such as ethylene oxide, carbon dioxide gas, dialkylaminobenzaldehyde, benzophenone, 4,4'-dialkylaminobenzophenone, N-methyl oxazolidinone, tolylene diisocyanate, diphenyl methane diisocyanate, carbon bisulfide, tetraalkoxysilane and alkyl triphenoxysilane to terminate.

When the steps [I] to [III] are appropriately repeated, the pre-hydrogenation polymers to be block copolymers having structures according to the aspects (2) to (6) as described in the article 1-3 above and the like can easily be obtained. In such a case, types and amounts of the monomers to be used in each step may be varied depending on objectives and applications. For example, when block copolymers having structure according to the aspects (2) to (6) as described in the article 1-3 above and the like are produced, in order to allow a distance between any two polymer block A's to be constant, namely, in order to allow the weight average molecular weight of the polymer block B' to be constant in a predetermined value, it is preferable to form a same polymer block B' by allowing the conditions of the step [II] to be repeated to be identical to each other, or to polymerize under a condition where a different polymer block B' is formed such that the weight average molecular weight comes to be same as that of the initially formed B'.

The block copolymer of the present invention can be produced by hydrogenating the polymer (P3) according to the steps [I] to [III]

A method of hydrogenation is not particularly limited, however, any method and condition can be applied so long as a degree of hydrogenation against each polymer block constituting a prehydrogenation polymer is in a specific range. The hydrogenation reaction against the pre-hydrogenation polymer can be performed in the presence of a catalyst, in an atmosphere of hydrogen gas at a given pressure and at a temperature in the range from 0°C to 150°C.

As for the catalyst mentioned above, (i) a catalyst in which a metal such as nickel, palladium, platinum, rhodium, ruthenium and rhenium is carried on a carrier such as silica, alumina and diatomaceous earth; (ii) a complex compound having from 0 to divalence in which a phosphorous compound is allowed to be a ligand; (iii) a titanium-containing organic compound or an organometallic compound (titanium tetrachloride, titanocene dichloride, titanocene diphenyl, titanocene ditolyl, titanocene dibenzyl or the like); (iv) a catalyst containing an organometallic compound selected from among an organic compound containing a transition metallic element such as iron, nickel, cobalt and zirconium (including zirconocene dichloride, trisacetyl acetonate iron, trisacetyl acetonate cobalt, cobalt octanoate, cobalt naphthenate, bisacetyl acetonate nickel, nickel octanoate, nickel naphthenate and the like), an organolithium belonging to groups 1 to 3 in the periodical table, polymer lithium, alkyl magnesium compound (dialkyl magnesium, a Grignard reagent and the like), an alkyl aluminum compound (trisalkyl aluminum, dialkyl aluminum-chloride, dialkyl aluminum hydride and the like) and an alkyl zinc compound, and the like may be used. Among these catalysts, (iii) titanium-containing organic compound or an organometallic compound (titanium tetrachloride, titanocene dichloride, titanocene diphenyl, titanocene ditolyl, titanocene dibenzyl or the like) is preferred.

The hydrogenation reaction using the catalyst mentioned above is ordinarily performed in the range from 0°C to 150°C. Pressure of hydrogen gas is in the range from 1 to 100 kgf/cm². In addition, reaction time is ordinarily in the range from 5 minutes to 24 hours.

When the pre-hydrogenation polymer (P3) produced by the steps mentioned above and the like is hydrogenated under the condition above, a block copolymer where hydrogenation rates against respective polymer blocks constituting the pre-hydrogenation polymer (P3) are different from one another can be obtained. Namely, degrees of hydrogenation against polymer blocks A¹' and A²' formed in steps [I] and [III] can be less than 20%, preferably from 0 to 10%, more preferably from 0 to 5% and particularly preferably 0%, and a degree of hydrogenation against the polymer block B' formed in the step [II] can be from 80 to 100%, preferably from 85 to 100% and more preferably from 90 to 98%.

In addition, the present block copolymer can be a polymer which is produced by hydrogenating a polymer (P5) obtained by comprising step [1] for polymerizing a monomer (t1) containing a conjugated diene compound, step [II] for polymerizing a monomer (t2) containing a conjugated diene compound in the presence of the resultant polymer (P1) and step [IV] for coupling the resultant polymer (P4) by using a multifunctional coupling agent, and has a degree of hydrogenation in polymer block formed in the above step [I] is less than 20%, and has a degree of hydrogenation in polymer block formed in the above step [II] is in the range from 80 to 100%. Performing these steps [I], [II] and [IV] leads to the pre-hydrogenation polymer having (A¹'-B')ₙX structure for producing the block copolymer having structure according to the aspect (7) as described in the article 1-3 above, namely, (A¹-B)ₙX structure.

The steps [I] and [II] may be carried out in the same manner as described above. Additionally, in order to produce the prehydrogenation polymer (A¹'-B')ₙX, the steps [I] and [II] mentioned above are alternately performed at least twice each. In the case the steps [I] and [II] are repeated twice each, types and amounts of the monomers to be used in each step may be varied depending on objectives and applications.

In the step [IV], coupling is performed on the polymer (P4) by using a multifunctional coupling agent. As for the multifunctional coupling agent, halogenated silicon compound such as silicon tetrachloride, methyl silicon trichloride, dimethyl silicon dichloride, trimethyl silicon chloride and silicon tetrabromide; alkoxy silicon compound such as tetraethoxysilicon and tetraphenoxysilicon; halogenated tin compound such as tin tetrachloride, methyl tin tetrachloride, dibutyl tin dichloride and tirbutyl tin chloride; allyl tin compound such as tetraallyl tin, diethyl diallyl tin, tetra(2-octenyl)tin; aromatic tin compound such as tetraphenyl tin and tetrabenzyl tin; germanium halide such as germanium tetrachloride; diethyl adipate; 1,2-dibromoethane; divinyl benzene; 1,4-chloromethyl benzene and the like can be used. These coupling agents may be used either alone or in combination of two types or more.

Coupling in the step [IV] is performed generally in the range from 0°C to 120°C and may be performed at a constant temperature or while raising the temperature. In addition, the reaction time is ordinarily in the range from 1 minute to 2 hours.

The block copolymer of the present invention which has structure according to the aspect (7) as described in the article 1-3 above can be produced by hydrogenating the polymer (P5) according to the steps [I], [II] and [IV] in the same manner as described above.

When the pre-hydrogenation polymer (P5) is hydrogenated under the condition above, a block copolymer where hydrogenation rates against respective polymer blocks constituting the pre-hydrogenation polymer. (P5) are different from one another can be obtained. Namely, degrees of hydrogenation against the polymer block A¹' formed in the step [I] can be less than 20%, preferably from 0 to 10%, more preferably from 0 to 5% and particularly preferably 0%, and a degree of hydrogenation against the polymer block B' formed in the step [II] can be from 80 to 100%, preferably from 85 to 100% and more preferably from 90 to 98%.

Further, the present block copolymer can be a polymer which is produced by hydrogenating a polymer (P6) obtained by comprising step [1] for polymerizing a monomer (t1) containing a conjugated diene compound, step [II] for polymerizing a monomer (t2) containing a conjugated diene compound in the presence of the resultant polymer (P1), step [III] for polymerizing a monomer (t3) containing a conjugated diene compound in the presence of the resultant polymer (P2) and step [V] for coupling the resultant polymer (P3) by using a multifunctional coupling agent, and has a degree of hydrogenation in each of polymer blocks formed in the above steps [I] and [III] is less than 20%, and has a degree of hydrogenation in polymer block formed in the above step [II] is in the range from 80 to 100%. Performing these steps [I], [II], [III] and [V] leads to the pre-hydrogenation polymer having structure such as (A^{1'}-B'-A^{2'})ₛX, (A^{1'}-B'-A^{2'}-B'-A^{1'})ₛX, (A^{1'}-B'-A^{1'}-B'-A^{2'})ₛX and (A^{1'}-B'-A^{2'}-B'-A^{2'})ₛX for producing the block copolymer having structures according to the aspects (8) to (11) as described in the article 1-3 above and the like.

The steps [I], [II] and [II] may be carried out in the same manner as described above. Additionally, the steps [I] to [III] may repeatedly be performed. In such a case, types and amounts of the monomers to be used in each step may be varied depending on objectives and applications. For example, in order to allow a distance between any two polymer block A's to be constant, namely, in order to allow the weight average molecular weight of the polymer block B' to be constant in a predetermined value, it is preferable to form a same polymer block B' by allowing the conditions of the step [II] to be repeated to be identical to each other, or to polymerize under a condition where a different polymer block B' is formed such that the weight average molecular weight comes to be same as that of the initially formed B'.

Coupling in the step [V] can be performed in the same manner as in the step [IV]. Further, by subjecting the polymer (P6) obtained by involving the steps [I], [II], [III] and [V] to hydrogenation in the same manner as described above, the block copolymer of the present invention having the structure of any one of the aspects (8) to (11) as described in the article 1-3 above can be obtained. By performing hydrogenation under the condition mentioned above on the prehydrogenation polymer (P6) obtained by the steps above and the like, speeds of performing hydrogenation on respective polymer blocks constituting the pre-hydrogenation polymer (P6) are allowed to be different from one another. Namely, the hydrogenation ratio of the polymer blocks A¹' formed in steps [I] and [III] is allowed to be less than 20%, preferably from 0 to 10%, more preferably from 0 to 5% and, particularly preferably, 0% and, then, the hydrogenation ratio of the polymer block B' formed in the step [II] is allowed to be from 80 to 100%, preferably from 85 to 100% and, more preferably, from 90 to 98%.

Further, in any one of the aspects, after the hydrogenation reaction, via the step of removing a catalyst residue form a polymerization solution, the step of adding a phenolic or amine-type anti-aging agent or the like, by a method of precipitation by adding acetone, alcohol or the like into the polymerization solution, a method of removing a solvent by evaporation by means of pouring the polymerization solution into hot water under stirring or the like, the block copolymer of the present invention can easily be isolated.

The weight average molecular weight of the thus-obtained block copolymer is preferably in the range from 7,000 to 1,000,000, preferably from 25,000 to 900,000 and more preferably from 50,000 to 800,000. In addition, the ratio (Mw/Mn) of the weight average molecular weight to the number average molecular weight is preferably in the range from 1 to 5, preferably from 1 to 3 and more preferably from 1.1 to 2.5.

In the description, the pre-hydrogenation polymer was obtained by alternately forming the polymer blocks A' and B' and, then, the block copolymer of the present invention was obtained by subjecting the thus-obtained pre-hydrogenation polymer to the hydrogenation reaction.

As for other production methods, for example, the block copolymer having the structure of the aspect (1) as described in the article 1-3 above is described. Firstly, the polymer B' is produced and, then, the polymer block A' is added to the thus-produced polymer B' all at once to prepare a pre-hydrogenation polymer and, thereafter, the thus-prepared pre-hydrogenation polymer is subjected to the hydrogenation reaction; to thereby obtain the block copolymer of the present invention. On this occasion, two polymer block A's which have been formed are same with each other. Further, at the time of forming the polymer block A', it is preferable to polymerize a predetermined monomer (t1) in the presence of a polar compound. As for the polar compound mentioned above, ether compounds such as diethyl ether, di-n-butyl ether, ethylene glycol diethyl ether, ethylene glycol dibutyl ether, diethylene glycol dimethyl ether, propylene glycol dimethyl ether, propylene glycol diethyl ether, propylene glycol dibutyl ether, tetrahydrofuran, 2,2- (bistetrahydrofurfuryl) propane, bistetrahydrofurfuryl formal, a methyl ether of tetrahydrofurfuryl alcohol, an ethyl ether of tetrahydrofurfuryl alcohol, a butyl ether of tetrahydrofurfuryl alcohol, α-methoxytetrahydrofuran, dimethoxybenzene and dimethoxyethane; tertamine compounds such as triethyl amine, pyridine, N,N,N',N'- tetramethylethylene diamine, dipiperidinoethane, a methyl ether of N,N-diethylethanolamine, a ethyl ether of N,N-diethylethanolamine, a butyl ether of N,N-diethylethanolamine and the like are mentioned. These polar compounds may be used either alone or in combination of two types or more.

As described above, since the block copolymer of the present invention comprises two polymer blocks each having an ethylenic unsaturated bond and other polymer block which is interposed between two polymer blocks, has a uniform weight average molecular weight in the range from 5,000 to 100,000, regularity of the structure is excellent and processability at the time of preparing a rubber composition is also excellent. since the block copolymer of the present invention comprises two polymer blocks each having an ethylenic unsaturated bond and other polymer block which is interposed between two polymer blocks, has a weight average molecular weight in the range from 5,000 to 100,000, and has a predetermined length, regularity of the structure is excellent and processability at the time of preparing a rubber composition is also excellent. Still further, when it comes to be cross-linked, by a cross-linking bond formed by making use of the ethylenic unsaturated bond which the polymer block A has, the cross-linked polymer forms a regularly network structure and, therefore, it can be made into a cross-linked rubber composition excellent in various types of physical properties such as wearing resistance, weatherability, ozone resistance and heat aging resistance. Even when this cross-linked rubber composition contains various types of additives to be described below which can be blended into a rubber product, for example, fillers such as silica, a softening agent such as process oil, an anti-aging agent and a processing material, the rubber composition can simultaneous has effects of such blending of these additives.

### 2. Cross-linked polymer

The cross-linked polymer of the present invention is characterized in comprising a network structure where the block copolymer mentioned above is cross-linked by a cross-linking agent.

The cross-linking agent is not particularly limited. And the preferred includes one can form a cross-linking bond based on an ethylenic unsaturated bond which is contained in the polymer block A constituting the block copolymer, one can form a cross-linking bond by at least reacting with an alkyl group bonded to an aromatic ring or the like in the case the block copolymer comprises a monomer unit formed by an aromatic vinyl compound. Therefore, sulfur, a sulfur-containing compound, an organic peroxide and the like can be used.

As for sulfur, powder sulfur, surface treated sulfur, insoluble sulfur, precipitation sulfur, colloidal sulfur and the like may be used. In addition, as for the sulfur-containing compound, a (poly)sulfide compound and the like may be used.

As for the organic peroxide mentioned above, dicumyl peroxide, di-tert-butyl peroxide, 2,5-dimethyl-2,5-di(tert-butyl peroxy)hexane, 2,5-dimethyl-2,5-di(tert-butyl peroxy)hexyne-3, 1,3-bis(tert-butyl peroxy isopropyl)benzene, 1,1-bis(tert-butyl peroxy)-3,3,5-trimethyl cyclohexane, n-butyl-4,4-bis(tert-butyl peroxy)valerate, benzoyl peroxide, p-chlorobenzoyl peroxide, 2,4-dichlorobenzoyl peroxide, tert-butyl peroxy benzoate, tert-butyl peroxy isopropyl carbonate, diacetyl peroxide, lauroyl peroxide, tert-butyl cumyl peroxide and the like may be used. These peroxides may be used alone or in combination of two or more.

In the case of using sulfur as the cross-linking agent mentioned above, a vulcanization accelerator, a vulcanizing aid or the like can simultaneously be used.

As for the vulcanization accelerator mentioned above, compounds of thiuram type, dithiocarbamate type, xanthate type, guanidine type, aldehyde-amine type, aldehyde-ammonia type, thiazole type, sulphenic amide type, thiourea type and the like may be used.

The thiuram type vulcanization accelerator mentioned above includes tetrakis(2-ethylhexyl)thiuram disulfide (TOT-N), tetramethyl thiuram monosulfide (TS), tetraethyl thiuramdisulfide (TET), tetramethyl thiuram disulfide (TT), dipentamethylene thiuram hexasulfide (TRA) and the like. These compounds can be used either alone or in combination of two types or more.

In addition, the vulcanizing aid includes zinc oxide, a higher fatty acid such as stearic acid, and the like.

The cross-linked polymer of the present invention can be obtained by mixing the block copolymer and the cross-linking agent under heating in the range of, preferably, from room temperature to 220°C. Since the thus-obtained cross-linked polymer forms a regular network structure, it is suitable for a molded product excellent in various physical properties, such as wearing resistance, weatherability, ozone resistance and heat aging resistance.

### 3. Rubber composition

The rubber composition of the present invention is characterized by comprising the block copolymer mentioned above and filler composed of a material selected from the group consisting of carbon black and silica.

As for carbon black, furnace black, acetylene black, thermal black, channel black, graphite black and the like are mentioned. These carbon black may be used either alone or in combination of two types or more. Among these carbon black, furnace black is particularly preferred. Specific examples thereof include various grades of carbon black such as SAF, ISAF, ISAF-HS, ISAF-LS, IISAF-HS, HAF, HAF-HS, HAF-LS, MAF, FEF, FEF-LS, GPF, GPF-HS, GPF-LS, SRF, SRF-HS, SRF-LM and the like. These carbon black can be used either alone or in combination of two types or more.

A nitrogen adsorption specific area (N₂SA) of carbon black is not particularly limited, but it is in the range of normally from 5 to 200 m²/g, preferably from 10 to 150 m²/g and, more preferably, from 20 to 130 m²/g. So long as the nitrogen adsorption specific area is within the above-described ranges, tensile strength, wearing resistance and the like of the cross-linked rubber composition are particularly favorable.

In addition, a DBP adsorption level of carbon black is not particularly limited, but it is in the range of normally from 5 to 300 ml/100 g, preferably from 20 to 200 ml/100 g and, more preferably, from 50 to 160 ml/100 g. So long as the DBP adsorption level is within the above-described ranges, tensile strength, wearing resistance and the like of the cross-linked rubber composition are particularly favorable.

As for silica, a dry method white carbon a wet method white carbon, a colloidal silica and a precipitated silica and the like are mentioned. These silicas may be used either alone or in combination of two types or more. Among them, a wet method white carbon containing mainly hydrous silicic acid is particularly preferred

A specific surface area of silica is not particularly limited, but it is in the range of normally from 50 to 400 m²/g, preferably from 100 to 25.0 m²/g and, more preferably, from 120 to 220 m²/g in terms of the nitrogen adsorption specific area. So long as the nitrogen adsorption specific area is within the above-described ranges, tensile strength, wearing resistance and the like of the cross-linked rubber composition are particularly favorable. On this occasion, the nitrogen adsorption specific area is a value measured by a BET method according to ASTM D3037-81.

Carbon black and silica mentioned above may be used either alone or in combination.

When carbon black alone is used as the filler, the content of this carbon black is preferably from 20 to 120 parts by mass, more preferably from 30 to 100 parts by mass, and still more preferably from 40 to 90 parts by weight, based on 100 parts by mass of the block copolymer mentioned above. When the content of carbon black is more than 120 parts by mass, there is a case in which an excess of carbon black comes to be a breaking spot and, then, the tensile strength is reduced, a case in which wearing resistance is reduced as hysteresis loss is increased or the like.

When silica alone is used as the filler, the content of this silica is preferably from 20 to 140 parts by mass, more preferably from 30 to 120 parts by mass, and still more preferably from 40 to 100 parts by weight, based on 100 parts by mass of the block copolymer mentioned above. When the content of the silica is more than 140 parts by mass, there is a case in which an excess of silica comes to be a breaking spot and, then, the tensile strength is reduced or a case in which wearing resistance is reduced as hysteresis loss is increased.

Further, as the filler, carbon black and silica may be used in combination. In this case, a sum of the contents of carbon black and silica is preferably from 20 to 140 parts by mass, more preferably from 30 to 120 parts by mass, and still more preferably from 40 to 100 parts by mass, based on 100 parts by mass of the block copolymer mentioned above. And a ratio of carbon black and silica is preferably from 5 to 95% / from 95 to 5% by mass, and more preferably from 10 to 90% by mass / from 90 to 10% by mass, based on 100% by mass of a sum of the contents of carbon black and silica.

Further, the rubber composition of the present invention may, other than the above-described fillers, contain an inorganic filler such as alumina hydrate (Al₂O₃·H₂O), aluminum hydroxide [Al(OH)₃] such as gibbsite or bayerite; magnesium hydroxide [Mg(OH)₂], magnesium oxide (MgO), talc (3MgO·4SiO₂·H₂O), attapulgite (5MgO·8SiO₂·9H₂O), titanium white (TiO2), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO₅,.Al₄·3SiO₄·5H₂O, or the like) , magnesium silicate (Mg₂SiO₄, MgSiO₃, or the like), calcium silicate (Ca₂SiO₄ or the like), aluminum calcium silicate (Al₂O₃·CaO·2SiO₂ or the like), magnesium calcium silicate (CaMgSiO₄), carbon black·silica·dual phase filler or the like; an organic filler such as a polymer filler or the like.

The rubber composition of the present invention may further contain various types of additives such as a softening agent; a cross-linking agent including a vulcanizing agent; a vulcanizing accelerator; a vulcanizing aid; a silane coupling agent; an anti-aging agent; a plasticizer; a tackiness imparting agent; a thermal stabilizer; a photostabilizer; an ultraviolet ray absorbing agent; a colorant; an anti-static agent; a slipping agent and a flame retardant, other polymers and the like.

As for the softening agent mentioned above, mineral oils such as a process oil, paraffin, liquid paraffin, petroleum asphalt and petrolatum; vegetable oils such as a castor oil, a flaxseed oil, a rapeseed oil, a soybean oil and a palm oil; waxes such as a tall oil, a bees wax, a carnauba wax and lanoline; fatty acids and metallic salts thereof such as recinoleic acid, palmitic acid, stearic acid, barium stearate and calcium stearate; ester compounds such as dioctyl phthalate, dioctyladipate and dioctyl sebacate are mentioned. These softening agents may be used either alone or in combination of two types or more.

An amount of the softening agent to be blended is, based on 100 parts by mass of a total of polymer components containing the block copolymer, preferably 60 parts by mass or less, more preferably 55 parts by mass or less and, still more preferably, 50 parts by mass or less.

As for the cross-linking agent mentioned above, those as described above can be used. An amount thereof to be blended is, based on 100 parts by mass of a total of polymer containing the block copolymer, preferably from 0.1 to 15 parts by mass, more preferably 0.3 to 10 parts by mass and, still more preferably, from 0.5 to 5 parts by mass.

As for the vulcanizing accelerator mentioned above, those as described above can be used. An amount thereof to be blended is, based on 100 parts by mass of a total of polymer containing the block copolymer, preferably from 0.1 to 15 parts by mass, more preferably 0.3 to 10 parts by mass and, still more preferably, from 1 to 10 parts by mass.

The silane coupling agent can enhance wearing resistance and the like of the vulcanized rubber composition to be obtained by being blended when silica is used as a filler. Examples of such silane coupling agents include vinyl trichlorosilane, vinyl triethoxysilane, vinyl tris(β-methoxy-ethoxy)silane, β-(3,4-epoxycyclohexyl)-ethyl tirmethoxy silane, γ-glycidoxypropyl trimethoxysilane, γ-glycidoxypropyl methyl diethoxysilane. γ-methacryloxypropyl trimethoxy silane, N-(β-aminoethyl)-γ-aminopropyl trimethoxysilane, N-(β-aminoethyl)-γ-aminopropyl trimethyldimethoxysilane, N-phenyl-γ-aminopropyl trimethoxysilane, γ-chloropropyl trimethoxy silane, γ-mercaptopropyl trimethoxysilane, γ-aminopropyl trimethoxysilane, bis-[3-(triethyxysilyl)propyl]tetrasulfide, bis-[3-(triethoxysilyl)propyl]disulfide, γ-trimethoxysilyl propyl dimethyl thiocarbamyl tetrasulfide, γ-trimethoxysilyl propyl benzothiazyl tetrasulfide. These coupling agents can be used either alone or in combination of two types or more.

An amount of the silane coupling agent to be blended is, based on 100 parts by mass of silica, preferably from 1 to 20 parts by mass and, particularly preferably, from 2 to 15 parts by mass.

As for the anti-aging agent mentioned above, amines and phenols can be mentioned.

As for the plasticizer mentioned above, a phosphoric acid ester such as tributyl phosphate; acid ester such as dibutyl phthalate, butyl oleate and dibutyl adipate; and chlorinated paraffin are mentioned.

The rubber composition of the present invention can be produced, for example, in a manner as described below.

Firstly, a polymer component containing the block copolymer, a filler and an additive such as a softening agent are loaded in a kneading machine such as a Banbury mixer or the like and, then, kneaded ordinarily at a temperature of from 70°C to 180°C. Thereafter, the resultant kneaded article was cooled. Subsequently, a cross-linking agent such as sulfur, a vulcanizing accelerator and the like are added to the kneaded article and, then, further kneaded, to thereby obtain a rubber composition.

When the rubber composition of the present invention is allowed to be a vulcanized rubber composition, it is excellent in tensile strength, wearing resistance, weatherability, ozone resistance and heat aging resistance.

### 4. Molded product

The molded product of the present invention is characterized in comprising the rubber composition. Namely, the molded product of the present invention contains at least the cross-linked polymer.

The molded product of the present invention can be manufactured, for example, by introducing the rubber composition into a metallic die or the like having a given shape. A method for cross-linking is selected in accordance with the cross-linking agent in the rubber composition.

The molded product of the present invention contains a vulcanized rubber composition and allows the tensile strength to be measured in accordance with JIS K6301 to be preferably 20 MPa or more, more preferably 25 MPa or more and, still more preferably, 30 MPa or more.

Further, a Lambourn wear index which is determined by a testing method to be described below is preferably 1.5 times, more preferably 1.6 times and, still more preferably 1.7 times as high as that determined by using a butadiene isoprene styrene copolymer (Mw=115, 000; Mw/Mn=1.15) prepared by a batch polymerization.

As for the molded product of the present invention, rubber products for tires such as a tread, a sidewall, a carcass and the like, a vibration-isolating rubber, various types of belts, various types of roller, various types of sealing materials and the like can be mentioned.

### EXAMPLE

Hereinafter, the present invention is specifically described with reference to embodiments. However, the present is not limited these embodiments at all. Further, "%" and "part" are given by mass in the embodiments, unless otherwise stated.

Various types of measurement and measuring methods thereof in Example are described below.

### (1) Content of ethylenic unsaturated bond

This was determined by comparing two ¹H-NMRs of polymers before and after hydrogenation.

### (2) Weight average molecular weight (Mw) and number average molecular weight (Mn)

These were determined in terms of polystyrene by gel permeation chromatography (GPC) apparatus (model "TYPE 244"; available from Waters Inc.).

### (3) Processability

Unity of damp rubber after kneading and gloss of a surface of a test piece thereof were visually inspected and evaluated based on the following evaluation criteria:
⊚: extremely favorable in the unity and the surface gloss of the rubber;
○: favorable;
Δ: slightly inferior; and
×: the unity of the damp rubber is broken apart and the gloss on the surface of the rubber is lost.

### (4) Tensile strength

This was measured in accordance with JIS K6301.

### (5) Lambourn wear index

Using a Lamborn-type abration test machine, an amount of abrasion was measured when a slip rate at 50°C was 60%.

### (6) Weatherability

This took ozone resistance as a reference.

Measuring conditions were set such that ozone concentration was 50 ppm; elongation was 20%; measuring temperature was 50°C and, then, surfaces of respective test pieces after 5 hours, 25 hours and 50 hours were visually inspected and evaluated based on the following evaluation criteria:

### [Number of cracks]

A: none
B: a few
C: studded
D: many
E: countless

### [Largeness of crack]

1: none
2: scarcely visually observed
3: clearly visually observed
4: small crack (1 mm or less)
5: middle-sized crack (from 1 to 3 mm)
6: coarse crack (3 mm or more)

For example, when there existed a few cracks which can scarcely be visually observed, the evaluation result was defined as "B-2".

### (7) Heat aging resistance

As for heat aging resistance, after a test piece was left standstill in an oven at 100°C for 48 hours, tensile strength and elongation were measured and change rates thereof against values measured before loading into a gear oven were shown. The tensile strength was measured in accordance with JIS K6301.

### 1. Production of block copolymer

### Example 1-1

2,400 g of cyclohexane which had previously been degassed and dehydrated, 12.0 g of tetrahydrofuran (THF) and 31 g of isoprene were charged into an autoclave having an inner capacity of 5 liter. Then the resultant mixture was added with 0.5 g (7.81 mmol) of n-butyl lithium (n-BuLi) and subjected to a polymerization while raising the temperature from 40°C to 50°C. After confirming that a polymerization conversion reached 100%, 265 g of 1,3-butadiene and 88 g of styrene were added to the resultant mixture and polymerized while raising the temperature from 50°C to 80°C. And after confirming that a polymerization conversion reached 100%, 16 g of isoprene was added to the resultant mixture and polymerized for 15 minutes at a temperature in the range from 80°C to 85°C. Thereafter, 0.315 g (1.85 mmol) of silicon tetrachloride as a coupling agent was added and subjected to a coupling reaction for 15 minutes, to thereby obtain a polymer solution containing a prehydrogenation block copolymer.

On the other hand, 1.95 g of titanocene dichloride was dispersed in 30 ml of cyclohexane by using another container. Then, 2.68 g of triethyl aluminum was added to them and reacted at room temperature. Subsequently, a dark blue solution which was apparently uniform was added to the resultant polymerization solution above and stirred to mix. Then, the resultant mixture was subjected to a hydrogenation reaction for 2 hours at 50°C under a pressure of 5.0 kgf/cm² using hydrogen gas. After that, a polymer and a solvent were separated by using methanol hydrochloric acid solution. Next, 3.5 g of 2,6-di-tert-butyl catechol was added and a distillation under reduced pressure was performed, to thereby obtain a partially hydrogenated block copolymer (a). The structure of this block copolymer was of (A¹-B¹-A²)₄X type, in which the degree of hydrogenation for the polymer block A^{1'} formed by a polymerization of first step was 0 %, the degree of hydrogenation for the polymer block B^{1'} formed by a polymerization of second step was 99 % and the degree of hydrogenation for the polymer block A^{2'} formed by a polymerization of third step was 0%. In addition, the weight average molecular weight was 357,000 and Mw/Mn was 1.35. These values and respective constitutional amounts, respective weight average molecular weights and respective contents of ethylenic unsaturated bonds of the polymer blocks A and B were shown in Table 1.

### Examples 1-2 to 1-9

Polymerization reactions and hydrogenation reactions were performed in the same manner as Example 1-1 except that types and amounts of monomers to be used, amounts of n-BuLi to be used, amounts of THF to be used, and types and amounts of the coupling agent to be used for obtaining pre-hydrogenation block copolymers were changed as shown in Table 2, to thereby obtain block copolymers (b) to (i). With reference to respective block copolymers (b) to (i) thus obtained, not only structures and weight average molecular weights, but also constitutional amounts, respective weight average molecular weights and respective contents of ethylenic unsaturated bonds of the polymer blocks A and B were shown in both Tables 1 and 2.

It is noted that the block copolymer (b) in Example 1-2 is one where THF was used in an amount one tenth that used in Example 1-1 and microstructures of diene units of respective polymer blocks were changed.

In addition, the block copolymer (i) in Example 1-9 is one obtained by selectively hydrogenating against 1,2-bond portion of linear molecular chain of the pre-hydrogenation block polymer in which the polymer block A¹' formed by the polymerization of first step is a polymer block which has 1,2-bond in a small amount and the polymer block B^{1'} formed by the polymerization of second step is a polymer block which has 1,2-bond in a large amount.

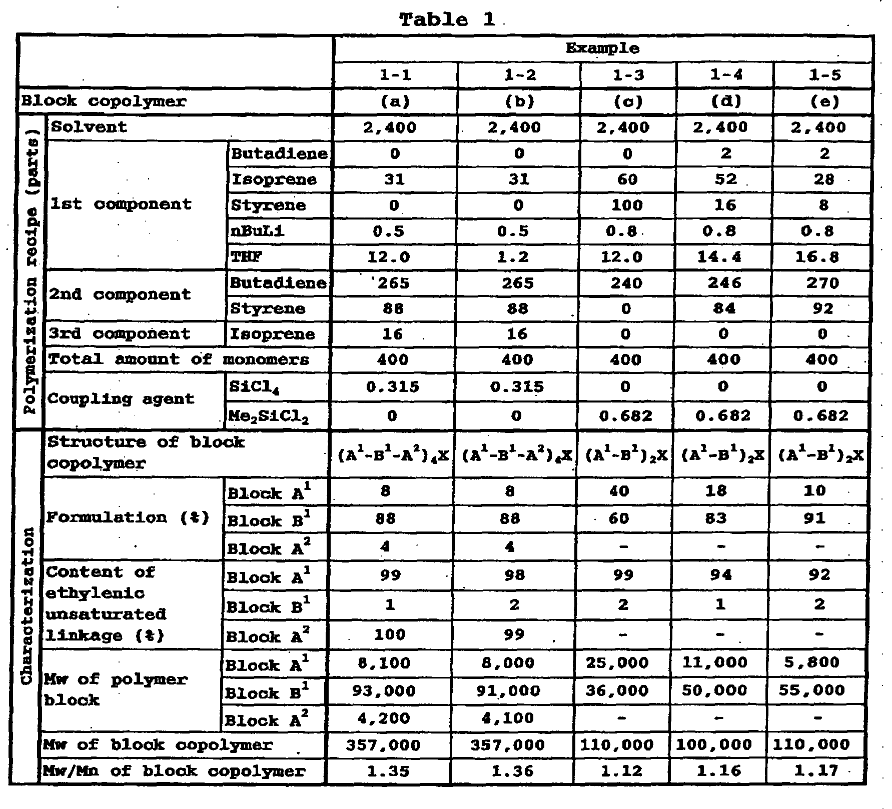

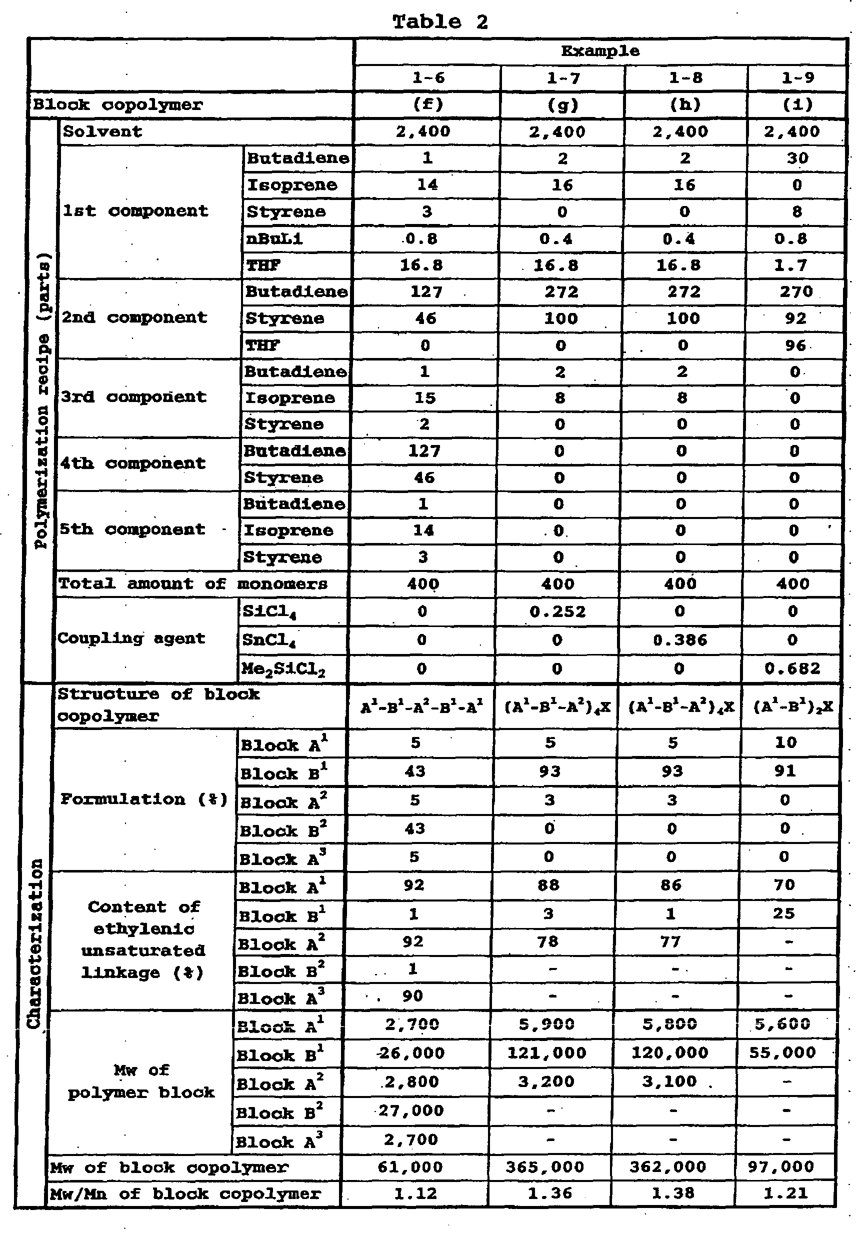

### Comparative Example 1-1

A linear polymer having (A¹-B¹)₂X type structure was synthesized in the same manner as in Example 1-5. Thereafter, hydrogenation reaction was not carried out and this copolymer was defined as a block copolymer (j). With reference to thus-obtained block copolymer (j), not only structure and weight average molecular weight, but also constitutional amounts, respective weight average molecular weights and respective contents of ethylenic unsaturated bonds of the polymer blocks A and B were shown in Table 3.

### Comparative Example 1-2

A partially hydrogenated block copolymer (k) was obtained in the same manner as in Example 1-5 except that isoprene was used in place of 1,3-butadiene in a polymerization of second step of Example 1-5. With reference to thus-obtained block copolymer (k), not only structure and weight average molecular weight, but also constitutional amounts, respective weight average molecular weights and respective contents of ethylenic unsaturated bonds of the polymer blocks A and B were shown in Table 3.

### Comparative Example 1-3

2,400 g of cyclohexane which had previously been degassed and dehydrated, 16.8 g of tetrahydrofuran (THF), 272 g of 1,3-butadiene, 28 g of isoprene and 100 g of styrene were charged into an autoclave having an inner capacity of 5 liter. Then the resultant mixture was added with 0.80 g of n-BuLi and subjected to a polymerization while raising the temperature from 30°C to 80°C. After confirming that a polymerization conversion reached 100%, 0.682 g of dimethyl dichlorosilicon was added to the resultant mixture and subjected to a coupling reaction for 15 minutes. Subsequently, a half amount of the thus-obtained polymerization solution was taken out (the rest is for Comparative Example 1-4) and 3.5 g of 2,6-di-tert-butyl catechol was added to this solution and subjected to a steam distillation to thereby remove the solvent. Thereafter, the resultant polymer was dried at 110°C by using a hot roll, to thereby obtain a polymer (1) which is not hydrogenated but is subjected to coupling. With reference to the thus-obtained copolymer (1), not only structure and weight average molecular weight, but also constitutional amount, weight average molecular weight and contents of ethylenic unsaturated bond of the polymer block A were shown in Table 3.

### Comparative Example 1-4

The remaining half amount of the polymerization solution obtained in Comparative Example 1-3 was subjected to hydrogenation in the same manner as in Example 1-1, to thereby obtain a hydrogenated polymer (m) of styrene-isoprene-butadiene ternary copolymer having random structure. With reference to the thus-obtained copolymer (m), not only structure and weight average molecular weight, but also constitutional amount, weight average molecular weight and contents of ethylenic unsaturated bond of the polymer block A were shown in Table 3.

### Comparative Example 1-5

A hydrogenated copolymer (n) was obtained in the same manner as in Example 1-9 except that an initial loading amount of THF was increased by 10 times and THF was not added at the time of adding the monomer to be charged in second step and thereafter. With reference to the thus-obtained block copolymer (n), not only structure and weight average molecular weight, but also constitutional amounts, respective weight average molecular weights and respective contents of ethylenic unsaturated bonds of the polymer blocks A and B were shown in Table 4.

### Comparative Examples 1-6 and 1-7

Polymerization reactions and hydrogenation reactions were performed in the same manner as Example 1-1 except that types and amounts of monomers to be used, amounts of n-BuLi to be used, and amounts of THF to be used for obtaining pre-hydrogenation block copolymers were changed as shown in Table 4, to thereby obtain block copolymers (o) and (p). With regard to respective block copolymers thus obtained, not only structure and weight average molecular weight, but also constitutional amounts, respective weight average molecular weights and respective contents of ethylenic unsaturated bonds of the polymer blocks A and B were shown in Table 4.

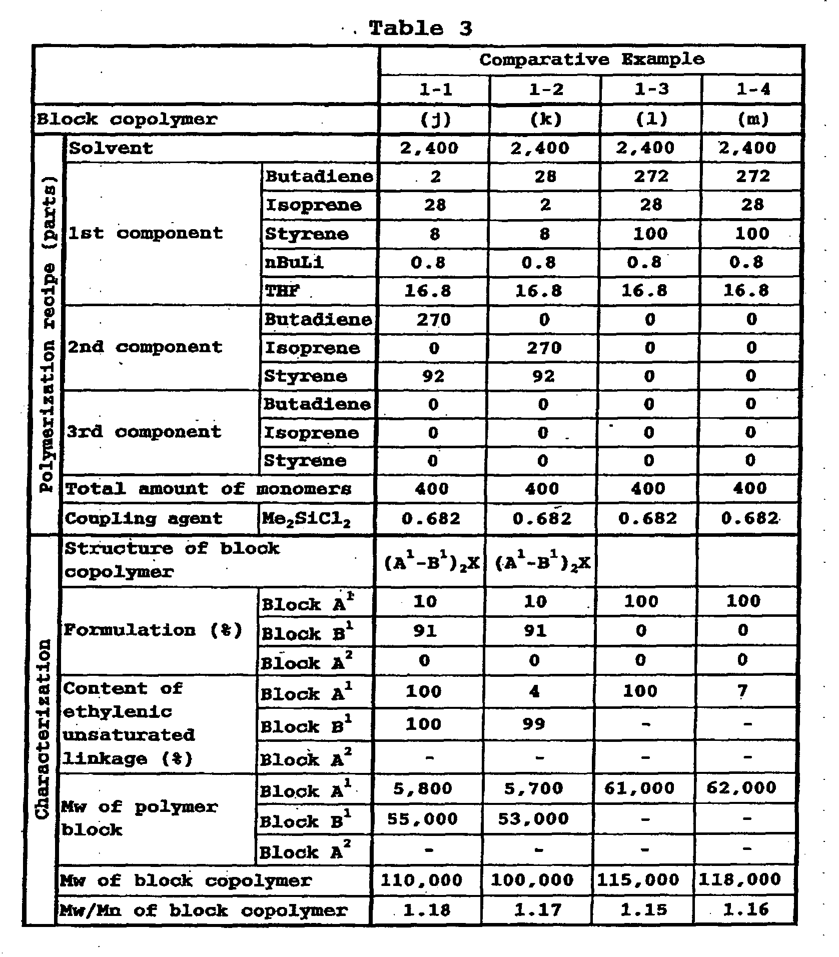

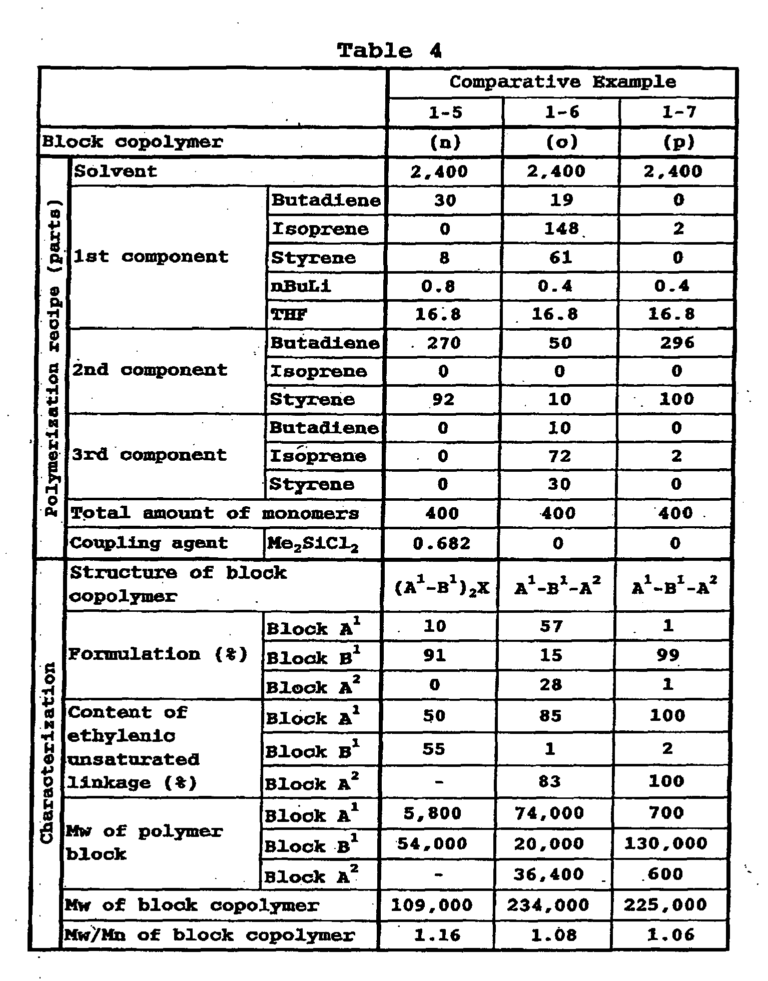

### 2. Production of rubber composition and evaluation thereof Examples 2-1 to 2-9 and Comparative Examples 2-1 and 2-7

The thus-obtained block copolymer or copolymer, carbon black (trade name: "Diablack N339"; available from Mitsubishi Chemical Corp.), silica (trade name "Nipsil AQ"; available from TOSOH SILICA CO. LTD,) and silan coupling agent (trade name "S175"; available from Degussa) were loaded into a kneader (trade name: "Laboplast Mill''; available from Toyo Seiki Co., Ltd.) and kneaded at a temperature in the range from 90°C to 145°C. Thereafter, thus kneaded rubber was once dumped and, sulfur, vulcanizing accelerator (i) (trade name: "NOCCELER DM"; available from Ouchishinko Chemical Industries Co., Ltd.) and vulcanizing accelerator (ii) (trade name: "NOCCELER TTTE"; Ouchishinko Chemical Industries Co., Ltd.) were added to the rubber and kneaded in the same kneader. Subsequently, the thus-kneaded composition was vulcanized in a die for various types of evaluations, to thereby obtain a vulcanized composition.

By using this vulcanized composition, processability, tensile strength, Lambourn wear index, weatherability and heat aging resistance were evaluated. The results were shown in Tables 5 to 7. The Lambourn wear index was shown in terms of index at the time of regarding a value of Comparative Example 2-3 as 100. The result shows that, as the number is higher, wearing resistance is more favorable.

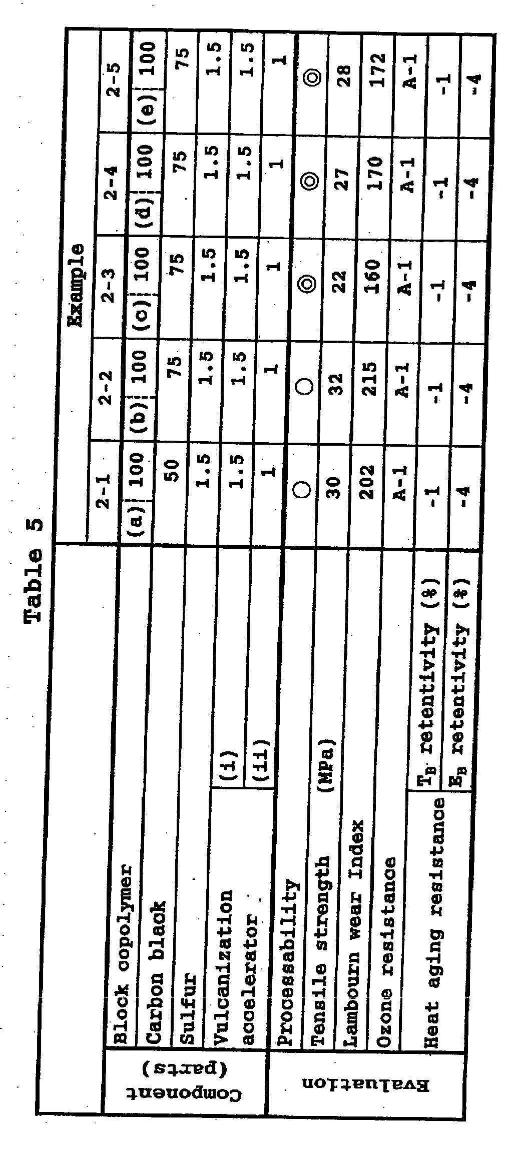

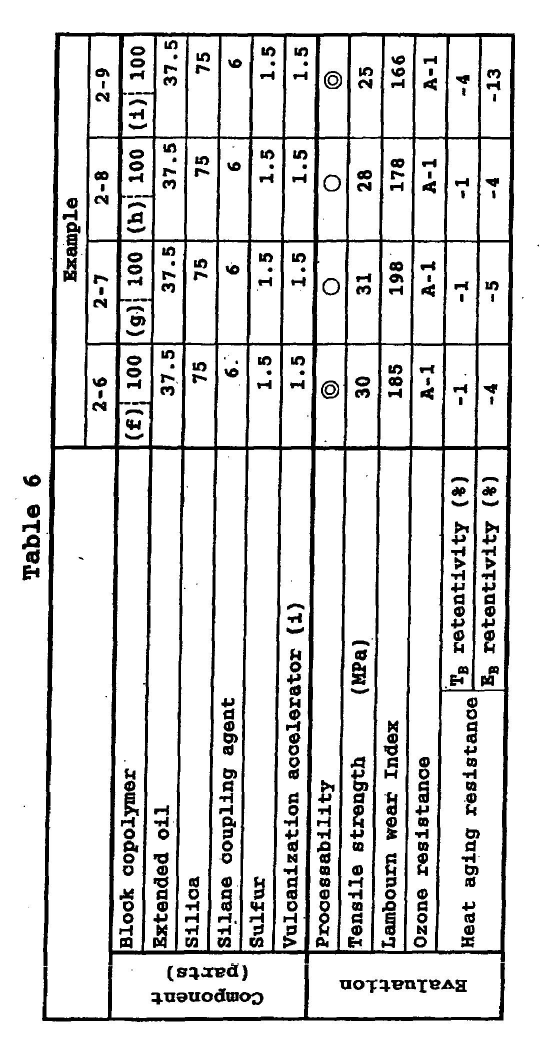

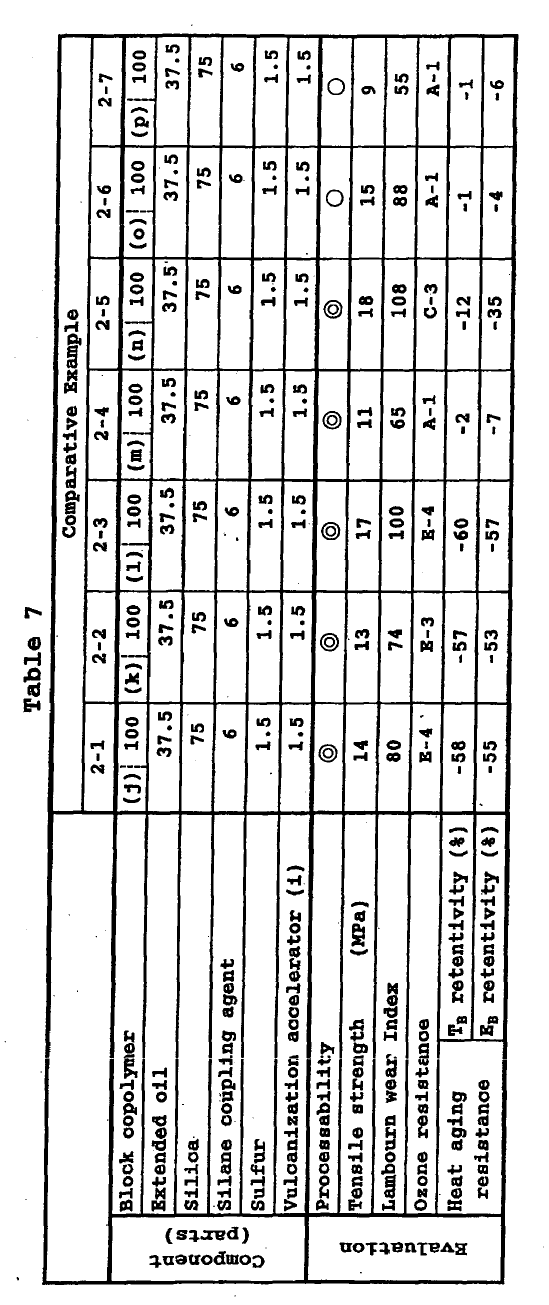

Based on the results from Table 7, it is found that, Comparative Example 2-1 was an example using the block copolymer (j) in which all polymer blocks have ethylenic unsaturated bond (since hydrogenation is not performed, a block where the number of ethylenic unsaturated bonds is reduced was not provided) and was inferior in tensile strength, wearing resistance, ozone resistance and heat aging resistance. Comparative Example 2-2 was an example using the block copolymer (k) which comprises two polymer blocks each having small amount of ethylenic unsaturated bonds and a polymer block having large amount of ethylenic unsaturated bonds interposed therebetween and was inferior in tensile strength, wearing resistance, ozone resistance and heat aging resistance, which is similar as in Comparative Example 2-1. Comparative Example 2-3 was an example using the polymer (1) containing only the polymer block A and was inferior in tensile strength, ozone resistance and heat aging resistance. Comparative Example 2-4 was an example using the polymer (m) containing only the polymer block A and was inferior in tensile strength and wearing resistance. Comparative Example 2-5 was outside the scope of the present invention and was an example using the block copolymer (n) in which contents of ethylenic unsaturated bonds of polymer blocks A and B are almost same (50% and 55%) with each other and was inferior in tensile strength and heat aging resistance. Comparative Example 2-6 was an example using the block copolymer (o) in which a constitutional amount of the polymer block B¹ is as small as 15%, The polymer block B¹ is unduly few (unduly short) as a non-cross-linking spacer, it could not be a cross-linked composition with a well-controlled distance between cross-linking points (there were not so many differences between the block copolymer (o) and an ordinary diene-based random polymer) and therefore, the cross-linked composition was inferior in tensile strength and wearing resistance. Comparative Example 2-7 was an example using the block copolymer (p) in which Mws of polymer block A¹ and A² are as small as 700 and 600, respectively and, since the chain length of the polymer block A was too short, a sufficient cross-linking could not be obtained and tensile strength and wearing resistance were inferior.

On the other hand, as shown from Tables 5 and 6, it is found that Examples 2-1 to 2-9 was favorable in processability and was excellent in balance of physical properties of tensile strength, wearing resistance, ozone resistance and heat aging resistance.

### Industrial Applicability

Since the block copolymer of the present invention comprises two polymer blocks each having an ethylenic unsaturated bond and other polymer block which is interposed between two polymer blocks, has a uniform weight average molecular weight in the range from 5,000 to 100,000, processability at the time of preparing a rubber composition is excellent. Since the block copolymer of the present invention comprises two polymer blocks each having an ethylenic unsaturated bond and other polymer block which is interposed between two polymer blocks, has a weight average molecular weight in the range from 5,000 to 100,000 and has a predetermined length, processability at the time of preparing a rubber composition is excellent. In addition, since the cross-linked polymer of the block copolymer has a regularly network structure, it is favorable for a rubber composition leading to a cross-linked rubber composition excellent in tensile property, wearing resistance, weatherability, ozone resistance and heat aging resistance when it is cross-linked, and further for a molded product produced by using this rubber composition. Specifically, the molded product is useful for rubber products for tires such as a tread, a sidewall and a carcass; a vibration-isolating rubber; various types of belts; various types of roller; various types of sealing materials and the like.

An objective of the present invention is to provide a block copolymer which is excellent in processability at the time of preparing a rubber composition and leads to a cross-linked rubber composition excellent in tensile property, wearing resistance, weatherability, ozone resistance and heat aging resistance when it is cross-linked, a rubber composition containing the block copolymer and a molded product. The block copolymer of the present invention comprises two polymer blocks each having an ethylenic unsaturated bond and other polymer block which is interposed between two polymer blocks, has a weight average molecular weight in the range from 5,000 to 100,000 and has a predetermined length. The weight average molecular weight of the polymer block having the ethylenic unsaturated bond is preferably in the range from 1,000 to 20,000.

## Claims

1. A block copolymer, being **characterized in** comprising two polymer blocks each having an ethylenic unsaturated bond and other polymer block which is interposed between said two polymer blocks, has a uniform weight average molecular weight in the range from 5,000 to 100,000.

2. A block copolymer, being **characterized in** comprising two polymer blocks each having an ethylenic unsaturated bond and other polymer block which is interposed between said two polymer blocks, has a weight average molecular weight in the range from 5,000 to 100,000 and has a predetermined length.

3. The block copolymer according to Claim 1 or 2,
wherein the weight average molecular weight of said polymer block having an ethylenic unsaturated bond is in the range from 1,000 to 20,000.

4. The block copolymer according to any one of Claims 1 to 3,
wherein a sum of constitutional amount of said polymer blocks each having an ethylenic unsaturated bond is in the range from 1 to 80% by mass based on said block copolymer, and
wherein a sum of constitutional amount of said other polymer block is in the range from 99 to 20% by mass based on said block copolymer.

5. The block copolymer according to any one of Claims 1 to 4,
wherein structural formula of said block copolymer is at least one type selected from the group consisting of A¹-B-A², A¹-B-A²-B-A¹, A¹⁻(B-A²)ₙ, A¹-(B-A²)ₙ-(B-A¹)ₘ, A¹-(B-A²)ₙ-(B-A¹)ₘ-(B-A²)ₘ, A¹-(B-A²-B-A¹)ₙ; (A¹⁻B)ₙX, (A¹-B-A²)ₛX, (A¹-B-A²-B-A¹)ₛX, (A¹-B-A¹-B-A²)ₛX and (A¹-B-A²-B-A)ₛX,
wherein A¹ and A² are said polymer blocks each having an ethylenic unsaturated bond, and B is said other polymer block, and
wherein m represents an integer from 1 to 4; n represents an integer from 2 to 6; s represents an integer from 1 to 6; X represents a residue of a coupling agent; and when a plurality of Bs are disposed, these Bs may be same with or different from one another.

6. The block copolymer according to Claim 5,
wherein said polymer block A¹ comprises mainly a monomer unit (a11) which is formed by a conjugated diene compound and is containing 1,4-bond, or said monomer unit (a11) and a monomer unit (a12) which is formed by an aromatic vinyl compound, and
wherein 80% or more of unsaturated bond originated from said conjugated diene compound is contained as an ethylenic unsaturated bond in said polymer block A¹.

7. The block copolymer according to Claim 5 or 6,
wherein said polymer block B comprises mainly a monomer unit (b11) which is formed by a conjugated diene compound, or said monomer unit (b11) and a monomer unit (b12) which is formed by an aromatic vinyl compound, and
wherein 0 to 20% of unsaturated bond originated from said conjugated diene compound is contained as an ethylenic unsaturated bond in said polymer block B.

8. The block copolymer according to any one of Claims 5 to 7,
wherein said polymer block A² comprises mainly a monomer unit (a21) which is formed by a conjugated diene compound and is containing 1,4-bond, or said monomer unit (a21) and a monomer unit (a22) which is formed by an aromatic vinyl compound, and
wherein 80% or more of unsaturated bond originated from said conjugated diene compound is contained as an ethylenic unsaturated bond in said polymer block A².

9. The block copolymer according to any one of Claims 5 to 8,
wherein said polymer block A¹ is a polymer block containing from 80 to 100% by mass of a monomer unit which is formed by isoprene, or a polymer block containing from 80 to 100% by mass in total of a monomer unit which is formed by isoprene and a monomer unit which is formed by an aromatic vinyl compound, and
wherein 80% or more of unsaturated bond originated from isoprene is contained as an ethylenic unsaturated bond in said polymer block A¹.

10. The block copolymer according to any one of Claims 5 to 9,
wherein said polymer block B is a polymer block containing from 80 to 100% by mass of a monomer unit which is formed by 1,3-butadiene, or a polymer block containing from 80 to 100% by mass in total of a monomer unit which is formed by 1,3-butadiene and a monomer unit which is formed by an aromatic vinyl compound, and
wherein 0 to 20% of unsaturated bond originated from 1,3-butadiene is contained as an ethylenic unsaturated bond in said polymer block B.

11. The block copolymer according to any one of Claims 5 to 10,
wherein said polymer block A² is a polymer block containing from 80 to 100% by mass of a monomer unit which is formed by isoprene, or a polymer block containing from 80 to 100% by mass in total of a monomer unit which is formed by isoprene and a monomer unit which is formed by an aromatic vinyl compound, and
wherein 80% or more of unsaturated bond originated from isoprene is contained as an ethylenic unsaturated bond in said polymer block A².

12. The block copolymer according to any one of Claims 1 to 11,
which is produced by hydrogenating a polymer (P3) obtained by comprising step [1] for polymerizing a monomer (t1) containing a conjugated diene compound, step [II] for polymerizing a monomer (t2) containing a conjugated diene compound in the presence of the resultant polymer (P1) and step [III] for polymerizing a monomer (t3) containing a conjugated diene compound in the presence of the resultant polymer (P2),
wherein a degree of hydrogenation in each of polymer blocks formed in said steps [I] and [III] is less than 20%, and
wherein a degree of hydrogenation in polymer block formed in said step [II] is in the range from 80 to 100%.

13. The block copolymer according to any one of Claims 1 to 11,
which is produced by hydrogenating a polymer (P5) obtained by comprising step [1] for polymerizing a monomer (t1) containing a conjugated diene compound, step [II] for polymerizing a monomer (t2) containing a conjugated diene compound in the presence of the resultant polymer (P1) and step [IV] for coupling the resultant polymer (P4) by using a multifunctional coupling agent,
wherein a degree of hydrogenation in polymer block formed in said step [I] is less than 20%, and
wherein a degree of hydrogenation in polymer block formed in said step [II] is in the range from 80 to 100%.

14. The block copolymer according to any one of Claims 1 to 11,
which is produced by hydrogenating a polymer (P6) obtained by comprising step [1] for polymerizing a monomer (t1) containing a conjugated diene compound, step [II] for polymerizing a monomer (t2) containing a conjugated diene compound in the presence of the resultant polymer (P1), step [III] for polymerizing a monomer (t3) containing a conjugated diene compound in the presence of the resultant polymer (P2) and step [V] for coupling the resultant polymer (P3) by using a multifunctional coupling agent,
wherein a degree of hydrogenation in each of polymer blocks formed in said steps [I] and [III] is less than 20%, and
wherein a degree of hydrogenation in polymer block formed in said step [II] is in the range from 80 to 100%.

15. The block copolymer according to any one of Claims 1 to 14.
wherein weight average molecular weight of said block copolymer is in the range from 7,000 to 1,000,000 and ratio of said weight average molecular weight to number average molecular weight is in the range from 1 to 5.

16. A cross-linked polymer, in which said block copolymer according to Claims 1 to 15 is cross-linked by a cross-linking agent, being **characterized in** comprising a network structure.

17. A rubber composition, being **characterized in** comprising said block copolymer according to Claims 1 to 15 and filler composed of a material selected from the group consisting of carbon black and silica.

18. The rubber composition according to Claim 17,
wherein said filler is carbon black, and
wherein content of said carbon black is from 20 to 120 parts by mass based on 100 parts by mass of said block copolymer.

19. The rubber composition according to Claim 17,
wherein said filler is silica, and
wherein content of said silica is from 20 to 140 parts by mass based on 100 parts by mass of said block copolymer.

20. The rubber composition according to Claim 17,
wherein said filler is carbon black and silica, and
wherein a sum of contents of said carbon black and said silica is from 20 to 140 parts by mass based on 100 parts by mass of said block copolymer.

21. A molded product, being **characterized in** comprising said rubber composition according to any one of Claims 17 to 20.
